**Europäisches Patentamt**

**European Patent Office**

**Office européen des brevets**

(19)

(11) **EP 1 617 267 A2**

(12) **EUROPÄISCHE PATENTANMELDUNG**

(43) Veröffentlichungstag:
**18.01.2006 Patentblatt 2006/03**

(51) Int Cl.:
*G02B 21/00* (2006.01)    *G02B 21/32* (2006.01)

(21) Anmeldenummer: **05012838.8**

(22) Anmeldetag: **15.06.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **16.07.2004 DE 102004034954**

(71) Anmelder: **CARL ZEISS JENA GmbH**
**07745 Jena (DE)**

(72) Erfinder:
• **Wilhelm, Stefan**
**07743 Jena (DE)**
• **Zimmermann, Bernhard**
**07743 Jena (DE)**

• **Engelmann, Ralf**
**07745 Jena (DE)**
• **Steinert, Jörg**
**07743 Jena (DE)**
• **Funk, Jörg-Michael**
**07743 Jena (DE)**
• **Engel, Jörg**
**07570 Weida (DE)**
• **Meisel, Ulrich**
**07743 Jena (DE)**

(74) Vertreter: **Beck, Bernard**
**Carl Zeiss Jena GmbH,**
**Carl-Zeiss-Promenade 10**
**07745 Jena (DE)**

(54) **Verfahren zur Erfassung mindestens eines Probenbereiches mit einem Lichtrastermikroskop mit linienförmiger Beleuchtung**

(57) Verfahren zur Erfassung mindestens eines Probenbereiches mit einem Lichtrastermikroskop durch eine Relativbewegung zwischen Beleuchtungslicht und Probe über erste Scanmittel entlang mindestens einer Scanachse im wesentlichen senkrecht zur Beleuchtungsachse,
wobei in einem Winkel zur Ebene der Relativbewegung, vorzugsweise senkrecht dazu , zweite Scanmittel , bewegt werden und eine Bildaufnahme erfolgt, indem die Bewegung der ersten und zweiten Scanmittel gekoppelt wird und eine dreidimensionale Abtastbewegung durch die Beleuchtung in der Probe erfolgt,
wobei die zweiten Scanmittel gekoppelt mit der Bewegung der ersten Scanmittel derart bewegt werden, dass gerade und / oder gekrümmte Linien und/ oder ebene und / oder gekrümmte Flächen gescannt werden , welche entlang mindestens einer Scanrichtungen der ersten Scanmittel als auch entlang der Scanrichtung der zweiten Scanmittel ausgedehnt sind.

**EP 1 617 267 A2**

**Beschreibung**

Stand der Technik:

In DE DE 19702753A, DE 19702752A, US 6037583 werden Laser-Scanning-Mikroskope beschrieben. Neben der X/Y Bewegung des Lichtpunktes über die Probe, die meist mit Galvanoscannern erzeugt wird, ist es bekannt, auch eine Z- Bewegung durchzuführen, um tiefenaufgelöste Bildstapel aufzunehmen.

Diese Bewegung in z-Richtung erfolgt beispielsweise mechanisch durch Bewegung des Objekts mittels einer z- Bewegung des Probentisches ( Piezo-Tisch, HRZ-Tisch in DE 19829982A1) oder auch durch Bewegung des Objektivs (beispielsweise Objektiv mit Piezoantrieb) .

Hier kann erstens eine Zielposition in Z-Richtung vorgegeben sein, wobei eine Messwertaufnahme nach Beendigung der Zustellbewegung des z-Antriebs erfolgt oder es erfolgt zweitens eine kontinuierliche Bewegung in z-Richtung, wobei nach Ablauf einer Einlaufphase der Stellbewegung des z-Antriebs (Beschleunigungsphase) eine Meßwertaufnahme kontinuierlich oder diskontinuierlich erfolgt.

Die erste Variante ist sehr langsam

Variante 2 ermöglicht zwar beispielsweise die schnelle Aufnahme eines z-Stapels, zwischen aufeinanderfolgenden z-Scans wird aber eine Pause zum Bremsen oder Beschleunigen des z-Triebs benötigt, bis sich der vorgegebene Bewegungsablauf eingestellt hat.

Erfindung:

Durch die Erfindung wie im weiteren beschrieben, insbesondere in den unabhängigen und abhängigen Patentansprüchen, wird nun ein schneller z-Fokus durch Betrieb des z-Antriebs über insbesondere periodische Ansteuersignale erzeugt, unter Abstimmung der Messwerterfassung und der Ansteuerung des z-Antriebs auf die mechanischen und elektrischen Eigenschaften des Systems.

Die z-Bewegung erfolgt vorteilhaft durch Bewegung des Objektives über Piezo- oder Galvanometerantrieb oder durch z-Bewegung der Probe über Piezo - oder Galvanometerantrieb.

Zur besonders schnellen z-Bewegung des Lichtspots sind auch adaptive Optiken im Beleuchtungsstrahlengang des Mikroskops geeignet. Diese bewegen den Lichtspot in der Probe durch Defokussierung in z-Richtung (DE19733193A1).

Erfindungsgemäß können unterschiedliche Ansteuerungsmodi für die z-Bewegung realisiert werden.

Die Scanneransteuerung für die x- und y- ist beispielsweise in DE 19702752A beschrieben.

In Bild 5 ist eine lineare Ansteuerung (Ansteuersignal A) mit schneller Probenbewegung P (hohe Frequenz) in Abhängigkeit von der Zeit dargestellt.

Die Bewegung P ist durch elektrische und mechanische Eigenschaften des Systems (z.B. Trägheit, Resonanzfrequenzen) verzerrt.

Hier dargestellt ist, dass trotz linearer Ansteuerung ab einer Frequenz von typischerweise 1 Hz oder mehr die resultierende z-Bewegung undefiniert kurvenförmig verläuft.

In Bild 6 ist daher eine vorteilhafte Linearisierung der z-Scanbewegung dargestellt. Dargestellt ist eine auf das System angepasste vorverzerrte Ansteuerung A. Die Bewegung P ist nach Übertragung durchs System linear (bis auf kleine Umkehrbereiche).

Das wird erreicht, indem das periodische Ansteuersignal derart vorverzerrt wird, dass die für das jeweilige System charakteristischen Verzerrungen, welche durch die nicht ideale elektrische und mechanische Übertragung der Ansteuersignale bedingt sind, kompensiert werden.

Die Ansteuerungskurve kann z.B. empirisch vorher ermittelt werden anhand von Werten von Ortssensoren, die die Scannerstellung registrieren, und durch Aufnahme von Fehlerkurven und gezielter Korrektur.

Ebenso kann anhand von Werten von Ortssensoren, die die Scannerstellung registrieren, direkt die Übertragungsfunktion des Systems gemessen werden.

Die Übertragungsfunktion des Systems gibt für jede genutzte Frequenz die Abweichung der realen Bewegung zwischen Probe und Lichtspot zu den Vorgaben durch die Ansteuersignale an. Zu jeder Frequenz gibt es eine Phasenverschiebung (z.B. Verzögerung durch die Übertragung) und eine Amplitudenänderung (z.B. Dämpfung durch die Übertragung)

Die Kenntnis der Übertragungsfunktion des Systems ermöglicht die gezielte Umrechnung einer gewünschten Kurve für die Bewegung zwischen Probe und Lichtspot in eine geeignete Ansteuerkurve zur Erzeugung dieser Bewegung .

Die empirische Ermittlung der geeigneten Ansteuerkurve oder auch die gezielte Berechnung der Ansteuerkurve kann vorteilhaft durch eine geeignete Fourierreihenentwicklung des Ansteuersignals und der Variation der Fourierkoeffizienten erfolgen. Je nach geforderter Genauigkeit dabei die Koeffizienten oberhalb einer Grenzfrequenz ausser Acht gelassen werden.

Die Ortssensoren, die die Scannerstellung registrieren, können beispielsweise optisch oder kapazitiv sein. Um eine Bewegungskurve P der Probe in z zu erreichen, die exakt der Vorgabe entspricht (z.B. exakt lineare Bewegung, d.h. konstante Geschwindigkeit im genutzten Bereich), wird eine Vorverzerrung der periodischen Ansteuersignale des Z-Antriebs (z.B. Piezo) derart vorgenommen, dass die mechanische Bewegung exakt dem gewünschten Bewegungsablauf entspricht (z.B. linearer Verlauf zur Zeit)

Die abhängig von der Frequenzzusammensetzung des Ansteuersignals auftretenden Verzerrungen durch die frequenzabhängigen Übertragungsfunktion des z-Antriebs (Unterschiede zwischen Ansteuersignalkurve (Vorgabe) und Bewegungskurve) werden dabei kompensiert.

Die Messwertaufnahme durch das Laser- Scanning- Mikroskop erfolgt dann z.B. in zeitlich konstanten Abständen (Umkehrbereiche der Scanbewegung ausgenommen) Die Linearisierung (Bestimmung der Vorverzerrung) erfolgt beispielsweise über Fourierkoeffizienten :

- Die Erzeugung der Scanner-Ansteuersignale erfolgt über eine Fou rierreihenentwicklung:

$$Pos(t) = \frac{8}{\pi^2} \cdot \left\{ \frac{a_1}{1^2} \cos\left(1 \cdot f \cdot t + \varphi_1\right) + \frac{a_3}{3^2} \cos\left(3 \cdot f \cdot t + \varphi_3\right) + \frac{a_5}{5^2} \cos\left(5 \cdot f \cdot t + \varphi_5\right) + \ldots \right\}$$

$a_1, a_3, a_5, \ldots$ : Amplitudenkoeffizienten
$\varphi_1, \varphi_3, \varphi_5, \ldots$ : Phasenkoeffizienten
f: Grundfrequenz der Scanbewegung
t: Zeit
Pos(t): Auslenkung des Scannerspiegels

Die einzelnen Koeffizienten für die Amplituden und Phasen ($a_i$, $\varphi_i$) dienen zur Kalibrierung der Scannerbewegung Im Falle einer (in der Praxis unmöglichen) idealen verzerrungsfreien Umsetzung der Ansteuersignale in die Scanbewegung ergäbe sich zur Bewegung in Form einer symmetrischen Dreieckskurve die ideale Fourierreihe der Dreieckfunktion: $a_i = 1$, $\varphi_i = 0$ (i =1,3,5,7,....)

Die einzelnen Frequenzkomponenten des Ansteuersignals werden vom Scansystem typischerweise nahezu unabhängig voneinander übertragen (je nach Linearität des Systems).

In der Praxis lässt sich eine ideale Dreieckskurve für die Auslenkung der Scannerspiegel nicht umsetzten, diese hätte unendlich hohe Beschleunigungen der Scannerspiegel an den Umkehrpunkten zur Folge

Deshalb beschränkt man sich beim Scannen eines Bildes (zeilenweises Scannen eines Probengebietes) auf einen Nutzbereich der Scannerbewegung. Das Bremsen und Beschleunigen der Spiegel erfolgt außerhalb dieses Bereichs. Typisch für Scaning-Mikroskopie sind Nutzbereiche von ca. 85% der Scannerperiode

Vorteilhaft ist eine einfache und zielgerichtete Kalibrierung möglich.

Alternativ kann eine Linearisierung der Scannerbewegung auch über eine zur Kalibrierung variable Ansteuerkurve erfolgen, die direkt durch Look-Up-Tables erzeugt wird. Vorteilhafterweise kann diese variable Ansteuerkurve auch durch variable Splines erzeugt werden.

Das sind vorgegebene Meßpunkte deren Anstieg in ihrer Umgebung zusätzlich vorgegeben ist, was zu einer glatteren Kurvenform führt

Eine Kalibrierung der Ansteuerkurven kann auch über über sogenannte Fittalgorithmen erfolgen (Variation der Look-Up-Table bis die Bewegung linear ist.)

Die Kalibrierung kann über im Bewegungssystem eingebaute Positions- oder Geschwindigkeitssensoren erfolgen (z.B. im Z-Antrieb eingebaute elektrische oder optische Positionssensoren), oder über eine optische Auswertung eines von einer Kalibrierprobe erzeugten (z.B. rückgestreuten) Signals (3D-Kalibrierprobe, z.B. äquidistante streuende oder reflektierende Ebenen in der Probe oder ein Probengitter.) Eine Kalibrierung kann auch über ein externes Messsystem (z.B. elektronische $\mu$m-Uhr am Probentisch oder am Objektiv) erfolgen.

In Bild 7 ist ein weiterer Ansteuermodus dargestellt.

Es erfolgt eine periodische z-Bewegung, deren Form an die mechanischen od. elektrischen Grenzen des Systems "Bewegte Masse + Antrieb " angepaßt werden kann.

Vorteil ist eine geringere mechanische Belastung von Probe und System.

Dies kann beispielsweise vorteilhaft eine sinusförmige Scanbewegung sein.

Der Betrieb des Systems "Bewegte Masse + Antrieb " kann hierbei auch in Resonanz erfolgen, wobei vorher die Resonanzfrequenz empirisch bestimmt wird. Dadurch können sehr hohe Amplituden bei hohen Frequenzen ermöglicht werden.

Eine Meßwertaufnahme durch das Laser-Scanning-Mikroskop kann z.B. in zeitlich oder örtlich konstanten Abständen erfolgen, wobei beispielsweise mit einem eingebauter Orts-Sensor die Meßwertaufnahme getriggert wird.

Das heißt, immer wenn die gewünschte z-Position erreicht ist wird gemessen (oder z.B. ein x-y-Scan ausgelöst) . Eine im Vorfeld durchgeführte Kalibrierung liefert für eine zeitlich gesteuerte Messwertaufnahme die Zuordnung zwischen Messzeitpunkten und z-Position (z.B. mittels Look-Up-Table).

Eine definierte, kalibrierte Ansteuerung der einzelnen Scanachsen im System ermöglicht auf vorteilhafte Weise ein synchrones Ansteuern der gewünschten Scanachsen und damit eine gezielte Steuerung der Bewegungsrichtung des Lichtspots im Probenvolumen.

Die Zeitpunkte zur Messwertaufnahme könnten auch aus der Ansteuerkurve berechnet werden.

Eine Messwertaufnahme kann in zeitlich konstanten Zeitabständen erfolgen.

Eine nachträgliche Entzerrung des Bildes bzw. z-Bildstapels auf eine lineare Bewegungskurve erfolgt mittels einer im Vorfeld durchgeführten Kalibrierung oder anhand von synchron zu den Messwerten aufgenommener Ortsmessungen .

Generell kann zur Beschleunigung der Bildaufnahme bei periodischen Scanbewegungen (in x, y, und z) die Meßwertaufnahme auch bidirektional (Hin- und Rückrichtung) erfolgen.

Vorteilhafte Scanstrategien zur vorteilhaften Kombination der drei schnellen Achsen x,y,z werden im Folgenden anhand der schematischen Darstellungen in Bild 4 näher erläutert.

In Bild 8 ist eine X/Y - Abtastung schematisch dargestellt.

Ein Scanner (X) ermöglicht durch Ansteuerung mit einer variablen Ansteuerspannung die freie Positionierung eines Laserspots in der Probe entlang einer Linie (normalerweise einer Geraden) ($X_{min}$... Xmax)

Mit einem zweiten Scanner (Y) (Drehachse vorteilhafter Weise senkrecht zur Drehachse des ersten Scanners) kann der Spot innerhalb einer Fläche (normalerweise eine Ebene = Scanebene) frei positioniert werden ($X_{min} < X < Xmax$, $Y_{min} < Y < Y_{max}$)

Um eine vorgegebene Position innerhalb der Scanebene anzufahren, wird der erste Scanner (X) mit der Positionsspannung angesteuert, die der Projektion des Zielpunktes auf seine Positionierrichtung entspricht ($X_{Ziel}$). Gleichzeitig wird auch der zweite Scanner mit der Positionsspannung angesteuert, die der Projektion der Zielposition auf seine Positionierrichtung entspricht ($Y_{Ziel}$).

In Bild 9 ist dargestellt, wie mittels der abgestimmten synchronen Ansteuerung des X- und Y- Scanners ein zu den X- und Y Achsen schräges Scanfeld SC erzeugt werden kann, indem während des Abfahrens einer Scanlinie jeweils X - und Y Scanner gleichzeitig und mit gleichförmiger Geschwindigkeit bewegt werden.

Der Winkel der Schräge wird durch Einstellung des Amplitudenverhältnisses der Spannungssignale der Scanner eingestellt.

Mit einem dritten Scanner (Z) (Drehachse vorteilhafterweise senkrecht zur Drehachse des ersten Scanners und senkrecht zur Drehachse des zweiten Scanners) kann der Spot innerhalb eines durch die maximalen Auslenkwinkel der Scanner begrenzten Probenvolumens (Scanvolumen) frei positioniert werden ($X_{min} < X < X_{max}$, $Y_{min} < Y < Y_{max}$, $Z_{min} < Z < Z_{max}$).

Um eine vorgegebene Position innerhalb des Scanvolumens anzufahren, werden gleichzeitig (analog zum Fall mit zwei Scannern) alle drei Scanner (X, Y und Z) mit der Positionsspannung angesteuert, die der Projektion des Zielpunktes auf die Positionierrichtung des jeweiligen Scanners entspricht ($X_{Ziel}$, $Y_{Ziel}$, $Z_{Ziel}$).

Durch Abfahren einer Sequenz von Zielpositionen lassen sich vorher definierbare Probengebiete abfahren.

Die Probengebiete können ein- zwei- oder dreidimensional sein Sequenzielles Abfahren von Punkten die auf einer Linie (z.B. Geraden) liegen entspricht einem Line-Scan (Abscannen einer Linie) (eindimensional).

Wird nur ein Scanner bewegt, beispielsweise der X-Scanner , wird eine gerade Linie aufgenommen, die parallel zur Bewegungsrichtung des Scanners liegt.

Ein in der Ebene gedrehter Linien -Scan wird erzeugt durch synchronisierte Bewegung zweier Scanner (siehe Bild 5).

Es können beliebig gedrehte gerade Linien beispielsweise in der XY-Ebene

Erzeugt werden.

Durch sequentielles Abscannen unter gleichzeitiger Bewegung von zwei Scannern kann auch eine geschlossene, beliebig geformte Linie (Spline) erzeugt werden.

Sequentielles Abfahren von mehreren Linien hintereinander erzeugt einen Flächenscan. Oft liegen die Linien innerhalb einer Ebene - es erfolgt ein zweidimensionaler Ebenen-Scan .

Üblich ist ein sequentielles Abfahren von geraden Linien in der Bewegungsrichtung der Scanner ( Rechteckscan). Ein Scanner wird hierbei schnell bewegt (X, Line-Scanner) und nach jeder Linie wird der andere Scanner (Y, Bildscanner) ein Stück weiter bewegt (Veränderung des Offsets) und damit ein Versatz zwischen den Linien senkrecht zu den Linien erzeugt.

Ein beliebig gedrehtes Rechteck in einer Ebene kann erzeugt werden ( Bild 9 ).

Ein sequentielles Abfahren von mehreren Ebenen-Scans, die beispielsweise übereinanderliegen, erzeugt einen Volumenscan (dreidimensional).

Im Folgenden sollen vorteilhafte Abläufe und Wirkungsweisen bei der erfindungsgemäßen schnellen, aufeinander abgestimmten Bewegung des L ichtspots in drei Raumkoordinaten erläutert werden.

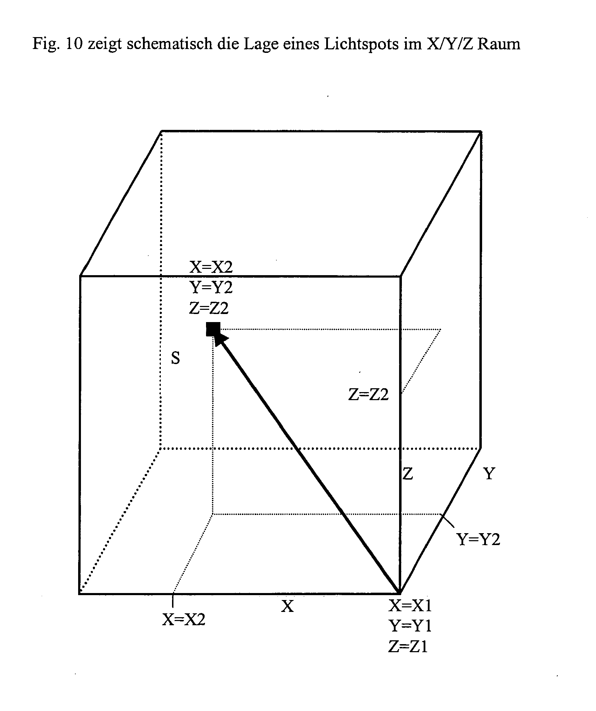

Fig. 10 zeigt schematisch die Lage eines Lichtspots im X/Y/Z Raum

Die Lage des Lichtspots wird durch aufeinander abgestimmte Ansteuerung der Scanner vorteilhaft wie folgt geändert:

X, Y und Z-Scanner scannen synchron (siehe Bild!)

Zum Zeitpunkt t=T1 sind die drei Scanner am Startpunkt der Linie (X1, Y1, Z1)

X-Scanner steht auf X=X1

Y-Scanner steht auf Y=Y1

Z-Scanner steht auf Z=Z1

Um eine geradlinige Bewegung des Spots im Probenvolumen zu erreichen wird die Form der Ansteuersignale aller drei Scanner wird so gewählt, dass bei einzelner Ansteuerung der Scanner eine sägezahn- oder dreiecksförmige Bewegung des Spots in der Probe entstehen würde (evtl. müssen die Ansteuersignale vorverzerrt sein) .

Die erzielte Auslenkung erfolgt also zur Nullachse der Schwingung entweder symmetrisch nach oben und unten ( bidirektionaler scan) oder in Rückrichtung der Bewegung steiler ( Sägezahn) für einen unidirektionalen scan bei dem so schnell wie möglich in die Ausgangslage zurückgekehrt werden soll.

Am Startpunkt (X1, Y1, Z1 ) sind alle drei Scanner (zur gleichen Zeit) an einem Extrempunkt (Umkehrpunkt) ihrer periodischen Bewegung)

Alle drei Scanner laufen mit der gleichen Grundfrequenz, d.h. nach der Zeit Tp (Periodenzeit) sind alle drei Scanner wieder am Ausgangspunkt (Startpunkt der Linie).

Die Amplitude der Scannerbewegung ist so gewählt, dass nach Ablauf der halben Periode (dann wenn alle drei Scanner am dem Startpunkt gegenüberliegenden Extrempunkt ihrer periodischen Bewegung angekommen sind, Zeitpunkt t=T2) alle drei Scanner auf den Endpunkt der Linie zeigen (X2, Y2, Z2)

X-Scanner steht auf X=X2

Y-Scanner steht auf Y=Y2

Z-Scanner steht auf Z=Z2

D.h. Amplitude X-Scanner = X2-X1, Amplitude Y-Scanner = Y2-Y1, Amplitude Z-Scanner = Z2-Z1.

Diese Form der Ansteuerung bewirkt das Abscannen einer geraden Linie vom Punkt (X1, Y1, Z1) zum Punkt (X2, Y2, Z2)

Startpunkt und Endpunkt sind innerhalb des Probenvolumens frei wählbar , das heißt die Länge und die Orientierung der Linie ist frei wählbar.

Zur beliebigen Ausrichtung der Scanrichtung im Probenvolumen erfolgt eine synchrone Ansteuerung aller drei Scanachsen analog zur synchronen Ansteuerung der zwei Scanachsen zur Drehung der Scanrichtung in der Ebene.

Bei einem HRZ- Tisch erfolgt eine Bewegung des Probentischs mit einem GalvanoScanner,

der vorteilhaft erfindungsgemäß wie die x/y Scanner angesteuert wird

Der Strom durch die Erregerspule des Galvo-Scanners wird mittels einer Regelelektronik anhand des Positionssensors derart angesteuert , dass die Gesamtheit Regelkreis + Scanner die Position anfährt, die in Form eines Ansteuersignals vorgegeben wird.

Bei einem Resonanzscanner ist die Eingabegröße für Regelkreis dann nicht die Position+Sollwert (Ansteuersignal) sondern typischerweise die Amplitude (Sensor) und Sollwert.

Man kann natürlich auch das Objektiv mit einem Galvanoscanner bewegen oder mit einem Resonanzscanner (Gewicht des Objektivs bestimmt dann die Resonanzfrequenz!)

Bei einer Bewegung des Probentischs oder des Objektivs mit einem Piezoelement erfolgt eine Änderung der Position durch Änderung der am Piezo angelegten Hochspannung.

Da die Regelkreise zu langsam sein können bzw. Fehler erzeugen, muss in beiden Fällen zumindest ab gewissen Geschwindigkeiten kalibriert werden., d.h. die Ansteuersignale (=Sollwerte für die elektronischen Regelkreise) werden so verändert (vorverzerrt), dass die tatsächliche Bewegung der gewünschten Bewegung entspricht..

Eine synchrone schnelle Ansteuerung in drei Scanachsen (x, y, und z) ermöglicht vorteilhaft eine beliebige Orientierung der Scanrichtung im Probenvolumen. Damit kann die Scanrichtung den Charakteristiken der Proben angepasst werden.

Beispielsweise wird ein beliebig im Probenraum orientierter Linienscan erzeugt, der vorteilhaft an einer markanten Probenstruktur ausgerichtet sein kann.

Weiterhin kann ein beliebig im Probenraum orientierter Flächenscan erzeugt werden, der vorteilhaft an einer Probenfläche ausgerichtet sein kann.

Es erfolgt ein sequentielles Abscannen von Linien auf einer beliebig im Probenraum liegenden Ebene, wobei ein Versatz zwischen den Linen vorteilhaft senkrecht zu den Linien und äquidistant sein kann.

Ein Beispiel wäre das Scannen einer schiefen Ebene, die sich über einen Bereich in z erstreckt

Die Scanfläche kann durch schnelle Ansteuerung von drei Scannern beliebig verdreht und gekippt werden.

Scanrichtung und Scanform kann der Lage und der Form der Probe in allen drei Achsen angepasst werden, z.B. offene oder geschlossene Splinescans mit beliebigen Verlauf im Probenraum.

Die Scanfläche kann bei entsprechender Ansteuerung der Scanner auch gewölbt sein Linescans können ebenso entsprechen gewölbt sein.

In allen drei Achsen kann durch die periodische Ansteuerung zur Erhöhung der Bildrate wahlweise auch bidirektional gescannt werden.

Statt des bidirektionalen Scannen können auch beliebig im Raum geformte geschlossene Linien abgescannt werden (entspricht einer periodischen Bewegung aller drei Scanner). Durch sequenzielles Abscannen solcher geschlossener Linien können beliebig geformte Oberflächen im Probenvolumen abgescannt werden.

Im Falle eines Linenscanner kann eine Koordinate weniger frei gewählt werden. Beim Linescanner ist die Linie als Scan-Form Vorgegeben und wird nicht durch eine Scanachse erzeugt.

Im folgenden wird detailliert ein Scanmikroskop, insbesondere ein Linienscanner anhand weiterer Darstellungen erläutert.

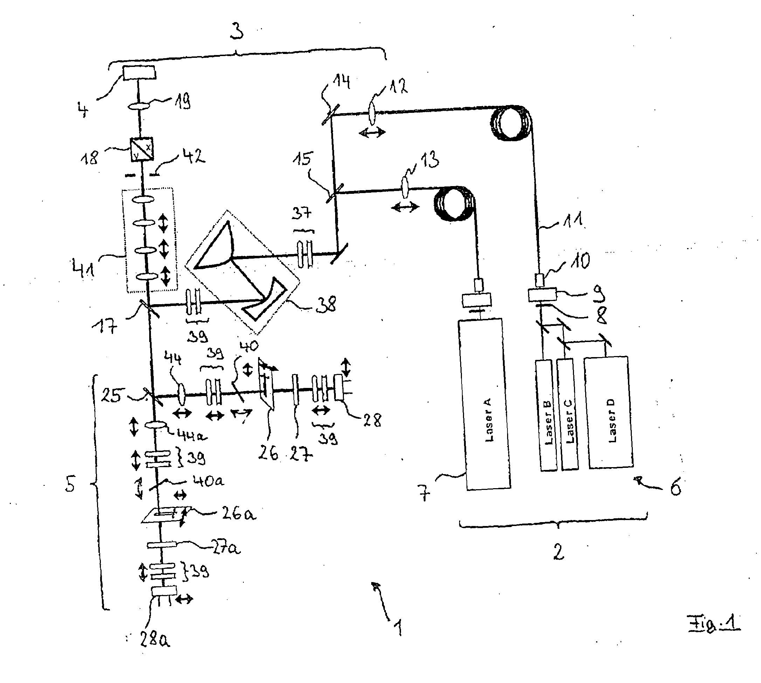

Figur 1 zeigt schematisch ein Laserscanningmikroskop 1, das im wesentlichen aus fünf Komponenten aufgebaut ist: einem Strahlungsquellenmodul 2, das Anregungsstrahlung für die Laserscanningmikroskopie erzeugt, einem Scanmodul 3, das die Anregungsstrahlung konditioniert und zum Scannen über eine Probe geeignet ablenkt, einem zur Vereinfachung nur schematisch gezeigten Mikroskopmodul 4, das die vom Scanmodul bereitgestellte scannende Strahlung in einem mikroskopischen Strahlengang auf eine Probe richtet, sowie einem Detektormodul 5, das optische Strahlung von der Probe erhält und detektiert. Das Detektormodul 5 kann dabei, wie es in Figur 1 dargestellt ist, spektral mehrkanalig ausgeführt sein.

Zur allgemeinen Beschreibung eines punktweise abtastenden Laser Scanning Mikroskopes wird auf DE 19702753A1 verwiesen, die somit Bestandteil der hier vorliegenden Beschreibung ist.

Das Strahlungsquellenmodul 2 erzeugt Beleuchtungsstrahlung, die für die Laserscanningmikroskopie geeignet ist, also insbesondere Strahlung, die Fluoreszenz auslösen kann. Je nach Applikation weist das Strahlungsquellenmodul dazu mehrere Strahlungsquellen auf. In einer dargestellten Ausführungsform werden zwei Laser 6 und 7 im Strahlungsquellenmodul 2 vorgesehen, denen jeweils ein Lichtventil 8 sowie ein Abschwächer 9 nachgeschaltet sind und die ihre Strahlung über ein Koppelstelle 10 in eine Lichtleitfaser 11 einkoppeln. Das Lichtventil 8 wirkt als Strahlablenker, mit dem eine Strahlabschaltung bewirkt werden kann, ohne den Betrieb der Laser in der Lasereinheit 6 bzw. 7 selbst abschalten zu müssen. Das Lichtventil 8 ist beispielsweise als AOTF ausgebildet, das zur Strahlabschaltung den Laserstrahl vor der Einkopplung in die Lichtleitfaser 11 in Richtung einer nicht dargestellten Lichtfalle ablenkt.

In der beispielhaften Darstellung der Figur 1 weist die Lasereinheit 6 drei Laser B, C, D auf, wohingegen die Lasereinheit 7 nur einen Laser A beinhaltet. Die Darstellung ist also beispielhaft für eine Kombination aus Einzel- und Multiwellenlängenlaser, die einzeln oder auch gemeinsam an eine oder mehrere Fasern angekoppelt sind. Auch kann die Ankopplung über mehrere Fasern gleichzeitig erfolgen, deren Strahlung später nach Durchlaufen einer Anpaßoptik durch Farbvereiniger gemischt wird. Es ist somit möglich, verschiedenste Wellenlängen oder-bereiche für die Anregungsstrahlung zu verwenden.

Die in die Lichtleitfaser 11 eingekoppelte Strahlung wird mittels verschieblichen Kollimationsoptiken 12 und 13 über Strahlvereinigungsspiegel 14, 15 zusammengeführt und in einer Strahlformungseinheit hinsichtlich des Strahlprofils verändert.

Die Kollimatoren 12, 13 sorgen dafür, daß die vom Strahlungsquellenmodul 2 an das Scanmodul 3 zugeführte Strahlung in einen Unendlichstrahlengang kollimiert wird. Dies erfolgt jeweils vorteilhaft mit einer einzelnen Linse, die durch Verschiebung entlang der optischen Achse unter Steuerung (einer nicht dargestellten) zentralen Ansteuereinheit eine Fokussierungsfunktion hat, indem der Abstand zwischen Kollimator 12, 13 und dem jeweiligen Ende der Lichtleitfaser veränderbar ist.

Die Strahlformungseinheit, welche später noch eingehend erläutert wird, erzeugt aus dem rotationssymmetrischen, gaußförmig profilierten Laserstrahl, wie er nach den Strahlvereinigungsspiegeln 14, 15 vorliegt, einen zeilenförmigen Strahl, der nicht mehr rotationssymmetrisch ist, sondern im Querschnitt zur Erzeugung eines rechteckig beleuchteten Feldes geeignet ist.

Dieser auch als zeilenförmig bezeichnete Beleuchtungsstrahl dient als Anregungsstrahlung und wird über einen Hauptfarbteiler 17 und eine noch zu beschreibende Zoomoptik zu einem Scanner 18 geleitet. Auf den Hauptfarbteiler wird später ebenfalls noch eingegangen, hier sei lediglich erwähnt, daß er die Funktion hat, vom Mikroskopmodul 4 zurückkehrende Probenstrahlung von der Anregungsstrahlung zu trennen.

Der Scanner 18 lenkt den zeilenförmigen Strahl ein- oder zweiachsig ab, wonach er durch ein Scanobjektiv 19 sowie eine Tubuslinse und ein Objektiv des Mikroskopmoduls 4 in einen Fokus 22 gebündelt wird, der in einem Präparat bzw. in einer Probe liegt. Die optische Abbildung erfolgt dabei so, daß die Probe in einer Brennlinie mit Anregungsstrahlung beleuchtet wird.

Derart im linienförmigen Fokus angeregte Fluoreszenz-Strahlung gelangt über Objektiv und Tubuslinse des Mikroskopmoduls 4 und das Scanobjektiv 19 zurück zum Scanner 18, so daß in Rückrichtung nach dem Scanner 18 wieder ein ruhender Strahl vorliegt. Man spricht deshalb auch davon, daß der Scanner 18 die Fluoreszenz-Strahlung descannt.

Der Hauptfarbteiler 17 läßt die in anderen Wellenlängenbereichen als die Anregungsstrahlung liegende Fluoreszenz-Strahlung passieren, so daß sie über einen Umlenkspiegel 24 im Detektormodul 5 umgelenkt und dann analysiert werden kann. Das Detektormodul 5 weist in der Ausführunsform der Figur 1 mehrere spektrale Kanäle auf, d.h. die vom Umlenkspiegel 24 kommende Fluoreszenz-Strahlung wird in einem Nebenfarbteiler 25 in zwei spektrale Kanäle aufgeteilt.

Jeder spektrale Kanal verfügt über eine Schlitzblende 26, die eine konfokale oder teilkonfokale Abbildung bezüglich der Probe 23 realisiert und deren Größe die Tiefenschärfe, mit der die Fluoreszenz-Strahlung detektiert werden kann, festlegt. Die Geometrie der Schlitzblende 26 bestimmt somit die Schnittebene innerhalb des (dicken) Präparates, aus der Fluoreszenz-Strahlung detektiert wird.

Der Schlitzblende 26 ist noch ein Blockfilter 27 nachgeordnet, das unerwünschte, in das Detektormodul 5 gelangte Anregungsstrahlung abblockt. Die derart abseparierte, aus einem bestimmten Tiefenabschnitt stammende, zeilenförmig aufgefächerte Strahlung wird dann von einem geeigneten Detektor 28 analysiert. Analog zum geschilderten Farbkanal ist auch der zweite spektrale Detektionskanal aufgebaut, der ebenfalls eine Schlitzblende 26a, ein Blockfilter 27a sowie einen Detektor 28a umfaßt.

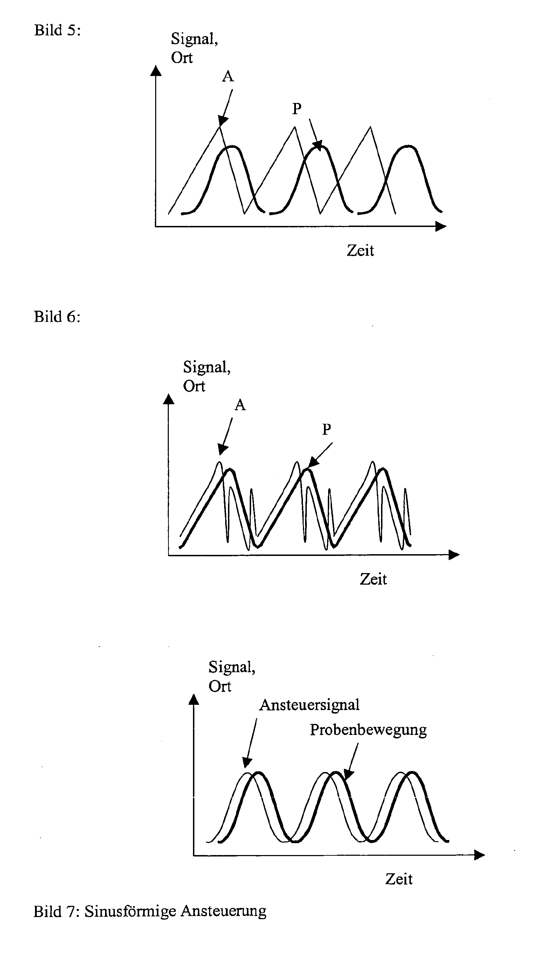

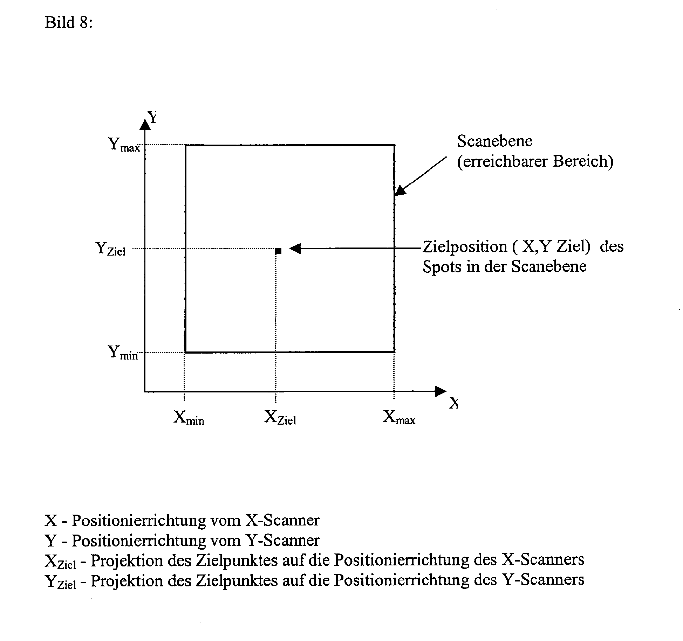

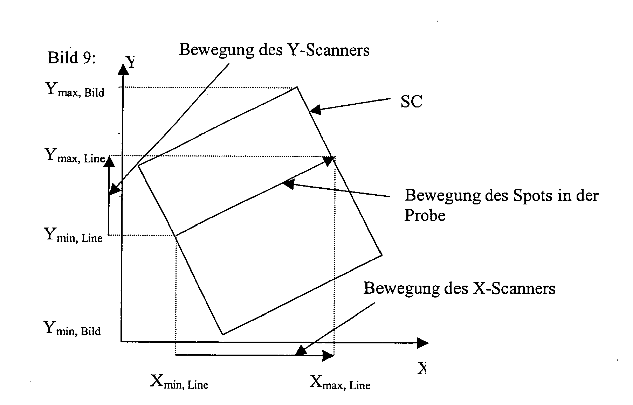

Die Verwendung einer konfokalen Schlitz-Apertur im Detektormodul 5 ist nur beispielhaft. Natürlich kann auch ein Einzelpunktscanner realisiert sein. Die Schlitzblenden 26, 26a sind dann durch Lochblenden ersetzt und die Strahlformungseinheit kann entfallen. Im übrigen sind für eine solche Bauweise alle Optiken rotationssymmetrisch ausgeführt. Dann können natürlich statt einer Einzelpunktabtastung und -detektion auch prinzipiell beliebige Mehrpunktanordnungen, wie Punktwolken oder Nipkow-Scheibenkonzepte, verwendet werden, wie sie später noch anhand Fig. 3 und 4 erläutert werden. Wesentlich ist dann allerdings, daß der Detektor 28 ortsauflösend ist, da eine parallele Erfassung mehrerer Probenpunkte beim Durchlauf des Scanners erfolgt.

In Figur 1 ist zu sehen, daß die nach den beweglichen, d.h. verschieblichen Kollimatoren 12 und 13 vorliegenden Gauß'schen Strahlenbündel über eine Spiegeltreppe in Form der Strahlvereinigungsspiegel 14, 16 vereinigt und bei der gezeigten Bauweise mit konfokaler Schlitzblende anschließend in ein Strahlbündel mit rechteckigem Strahlquerschnitt konvertiert werden. In der Ausführungsform der Figur 1 wird in der Strahlformungseinheit ein Zylinderteleskop 37 verwendet, dem eine Asphäreneinheit 38 nachgeordnet ist, auf das eine Zylinderoptik 39 folgt.

Nach der Umformung liegt ein Strahl vor, der in einer Profilebene im wesentlichen ein rechteckiges Feld ausleuchtet, wobei die Intensitätsverteilung entlang der Feldlängsachse nicht gaußförmig, sondern kastenförmig ist.

Die Beleuchtungsanordnung mit der Asphäreneinheit 38 kann zur gleichmäßigen Füllung einer Pupille zwischen einer Tubuslinse und einem Objektiv dienen. Damit kann die optische Auflösung des Objektivs voll ausgeschöpft werden. Diese Variante ist somit auch zweckmäßig in einem Einzelpunkt oder Multipunkt scannenden Mikroskopsystem, z. B. in einem linien-scannenden System (bei letzterem zusätzlich zu der Achse, in der auf bzw. in die Probe fokussiert wird).

Die z. B. linienförmig konditionierte Anregungsstrahlung wird auf den Hauptfarbteiler 17 gelenkt. Dieser ist in einer bevorzugten Ausführungsform als spektral-neutraler Teilerspiegel gemäß der DE 10257237 A1 ausgeführt, deren Offenbarungsgehalt hier vollumfänglich einbezogen ist. Der Begriff "Farbteiler" umfaßt also auch nichtspektral wirkende Teilersysteme. Anstelle des beschriebenen spektral unabhängigen Farbteilers kann auch ein homogener Neutralteiler (z.B. 50/50, 70/30, 80/20 o.ä.) oder ein dichroitischer Teiler Verwendung finden. Damit applikationsabhängig eine Auswahl möglich ist, ist der Hauptfarbteiler vorzugsweise mit einer Mechanik versehen, die einen einfachen Wechsel ermöglicht, beispielsweise durch ein entsprechendes Teilerrad, das einzelne, austauschbare Teiler enthält.

Ein dichroitischer Hauptfarbteiler ist besonders dann vorteilhaft, wenn kohärente, d. h. gerichtete Strahlung detektiert werden soll, wie z.B. Reflexion, Stokes'sche bzw. anti-Stokes'sche Raman-Spektroskopie, kohärente Raman-Prozesse höherer Ordnung, allgemein parametrische nicht-lineare optische Prozesse, wie Second Harmonic Generation, Third Harmonic Generation, Sum Frequency Generation, Zwei- und Mehrfotonenabsorption bzw. Fluoreszenz. Mehrere dieser Verfahren der nicht-linearen optischen Spektroskopie erfordern den Einsatz zweier oder mehrer Laserstrahlen, die kollinear überlagert werden. Hierbei erweist sich die dargestellte Strahlvereinigung der Strahlung mehrerer Laser als besonders vorteilhaft. Grundsätzlich können die in der Fluoreszenzmikroskopie weitverbreiteten dichroitischen Strahlteiler verwendet werden. Auch ist es für Raman-Mikroskopie vorteilhaft vor den Detektoren holografische Notch-Teiler oder -Filter zu Unterdrückung des Rayleigh-Streuanteils zu verwenden.

In der Ausführungsform der Figur 1 wird die Anregungsstrahlung bzw. Beleuchtungsstrahlung dem Scanner 18 über eine motorisch steuerbare Zoom-Optik 41 zugeführt. Damit kann der Zoom-Faktor angepaßt werden und das abgetastete Sehfeld ist in einem bestimmten Verstellbereich kontinuierlich variierbar. Besonders vorteilhaft ist eine Zoom-Optik, bei der während Anpassung der Fokuslage und des Abbildungsmaßstabes die Pupillenlage im kontinuierlichen Durchstimmvorgang erhalten bleibt. Die in Figur 1 dargestellten, durch Pfeile symbolisierten, drei motorischen Freiheitsgrade der Zoom-Optik 41 entsprechen genau der Zahl der Freiheitsgrade, die zur Anpassung der drei Parameter, Abbildungsmaßstab, Fokus-, Pupillenlage, vorgesehen sind. Besonders bevorzugt ist eine Zoom-Optik 41, an deren ausgangsseitigen Pupille eine feste Blende 42 angeordnet ist. In einer praktischen einfachen Realisierung kann die Blende 42 auch durch die Begrenzung der Spiegelfläche des Scanners 18 vorgegeben sein. Die ausgangsseitige Blende 42 mit der Zoom-Optik 41 erreicht, daß unabhängig vom Verstellen der Zoomvergrößerung immer ein festgelegter Pupillendurchmesser auf das Scanobjektiv 19 abgebildet wird. Somit bleibt die Objektivpupille auch bei beliebiger Verstellung der Zoomoptik 41 vollständig ausgeleuchtet. Die Verwendung einer eigenständigen Blende 42 verhindert vorteilhaft das Auftreten ungewollter Streustrahlung im Bereich des Scanners 18.

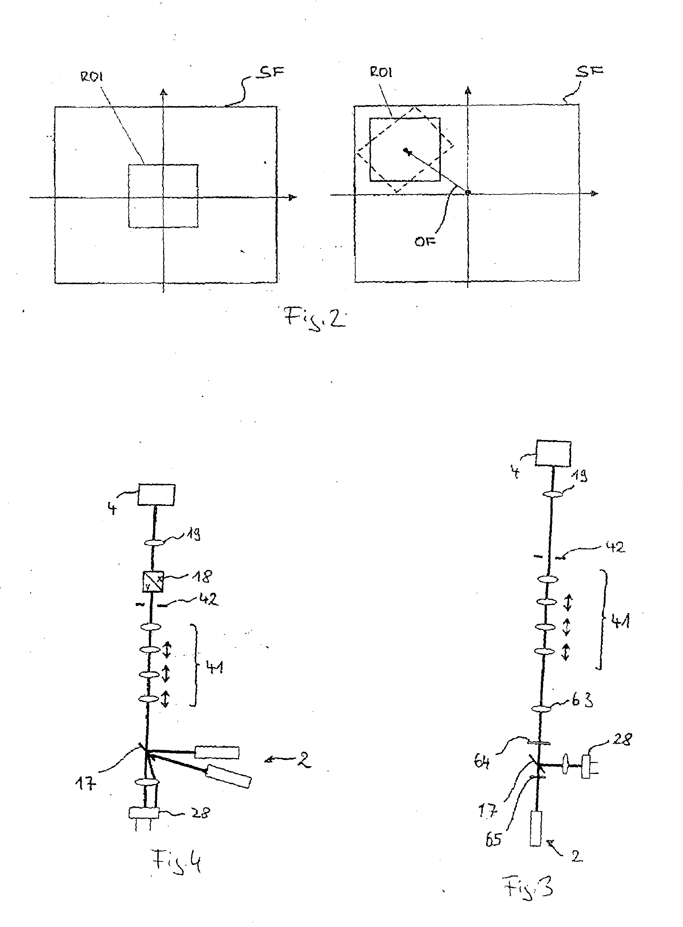

Mit der Zoom-Optik 41 wirkt das Zylinderteleskop 37 zusammen, das ebenfalls motorisch betätigbar ist und der Asphäreneinheit 38 vorgeordnet ist. Dies ist in der Ausführungsform der Figur 2 aus Gründen eines kompakten Aufbaus gewählt, muß aber nicht so sein.

Wird ein Zoom-Faktor kleiner 1,0 gewünscht, wird das Zylinderteleskop 37 automatisch in den optischen Strahlengang eingeschwenkt. Es verhindert, daß die Aperturblende 42 unvollständig ausgeleuchtet ist, wenn das Zoomobjektiv 41 verkleinert ist. Das einschwenkbare Zylinderteleskop 37 gewährleistet somit, daß auch bei Zoom-Faktoren kleiner 1, d. h. unabhängig von der Verstellung der Zoomoptik 41 am Ort der Objektivpupille stets eine Beleuchtungslinie konstanter Länge vorliegt. Im Vergleich zu einem einfachen Sehfeld-Zoom sind somit Laserleistungsverluste in dem Beleuchtungsstrahl vermieden.

Da beim Einschwenken des Zylinderteleskops 37 ein Bildhelligkeitssprung in der Beleuchtungslinie unvermeidlich ist, ist in der (nicht dargestellten) Steuereinheit vorgesehen, daß die Vorschubgeschwindigkeit des Scanners 18 oder ein Verstärkungsfaktor der Detektoren im Detektormodul 5 bei aktiviertem Zylinderteleskop 37 entsprechend angepaßt ist, um die Bildhelligkeit konstant zu halten.

Neben der motorisch angetriebenen Zoomoptik 41 sowie dem motorisch aktivierbaren Zylinderteleskop 37 sind auch im Detektormodul 5 des Laserscanningmikroskops der Figur 1 fernsteuerbare Justierelemente vorgesehen. Zur Kompensation von Farblängsfehlern sind beispielsweise vor der Schlitzblende eine Rundoptik 44 sowie eine Zylinderoptik 39 und unmittelbar vor dem Detektor 28 eine Zylinderoptik 39 vorgesehen, die jeweils in axialer Richtung motorisch verschiebbar sind.

Zusätzlich ist zur Kompensation eine Korrektureinheit 40 vorgesehen, die nachfolgend kurz beschrieben wird.

Die Schlitzblende 26 bildet zusammen mit einer vorgeordneten Rundoptik 44 sowie der ebenfalls vorgeordneten ersten Zylinderoptik 39 sowie der nachgeordneten zweiten Zylinderoptik ein Pinhole-Objektiv der Detektoranordnung 5, wobei das Pinhole hier durch die Schlitzblende 26 realisiert ist. Um eine unerwünschte Detektion von im System reflektierter Anregungsstrahlung zu vermeiden, ist der zweiten Zylinderlinse 39 noch das Blockfilter 27 vorgeschaltet, das über geeignete spektrale Eigenschaften verfügt, um lediglich gewünschte Fluoreszenzstrahlung zum Detektor 28, 28a gelangen zu lassen.

Ein Wechsel des Farbteilers 25 oder des Blockfilters 27 bringt unvermeidlich einen gewissen Kipp- oder Keilfehler bei Einschwenken mit sich. Der Farbteiler kann einen Fehler zwischen Probenbereich und Schlitzblende 26, das Blockfilter 27 einen Fehler zwischen Schlitzblende 26 und Detektor 28 nach sich ziehen. Um zu verhindern, daß dann eine Neujustierung der Lage der Schlitzblende 26 bzw. des Detektors 28 erforderlich ist, ist zwischen der Rundoptik 44 und der Schlitzblende 26, d.h. im Abbildungsstrahlengang zwischen Probe und Detektor 28 eine planparallele Platte 40 angeordnet, die unter Steuerung eines Controllers in verschiedene Kippstellungen gebracht werden kann. Die planparallele Platte 40 ist dazu in einer geeigneten Halterung verstellbar angebracht. Figur 2 zeigt, wie mit Hilfe der Zoom-Optik 41 innerhalb des zur Verfügung stehenden maximalen Scanfeldes SF ein Bereich (region of interest) ROI ausgewählt werden kann. Beläßt man die Ansteuerung des Scanners 18 so, daß die Amplitude sich nicht verändert, wie dies beispielsweise bei Resonanz-Scanner zwingend erforderlich ist, bewirkt eine an der Zoom-Optik eingestellte Vergrößerung größer 1,0 eine Einengung des ausgewählten Bereiches ROI zentriert um die optische Achse des Scanfeldes SF. Resonanzscanner sind beispielsweise in Pawley, Handbook of Biological Confocal Microscopy , Plenum Press 1994, Seite 461ff beschrieben.

Steuert man den Scanner so an, daß er ein Feld asymmetrisch zur optischen Achse, d. h. zur Ruhelage der Scannerspiegel abtastet, so erhält man im Zusammenhang mit einer Zoomwirkung eine Offsetverschiebung OF des ausgewählten Bereiches ROI. Durch die bereits erwähnte Wirkung des Scanners 18, zu descannen, und durch den nochmaligen Durchlauf durch die Zoom-Optik 41, wird die Auswahl des interessierenden Bereiches ROI im Detektionsstrahlengang wieder in Richtung auf den Detektor hin aufgehoben. Somit kann man eine beliebige innerhalb des Scanbildes SF liegende Auswahl für den Bereich ROI treffen. Zusätzlich kann man für verschiedene Auswahlen des Bereiches ROI Bilder gewinnen und diese dann zu einem hochauflösenden Bild zusammensetzen.

Möchte man den ausgewählten Bereich ROI nicht nur um einen Offset OF gegenüber der optischen Achse verschieben, sondern auch zusätzlich drehen, ist eine Ausführungsform zweckmäßig, die in einer Pupille des Strahlenganges zwischen Hauptfarbteiler 17 und Probe 23 ein Abbe-König-Prisma vorsieht, das bekanntermaßen eine Bildfelddrehung zur Folge hat. Auch diese wird in Richtung auf den Detektor hin wieder aufgehoben. Nun kann man Bilder mit verschiedenen Offsetverschiebungen OF und verschiedenen Drehwinkeln messen und anschließend zu einem hochauflösenden Bild verrechnen, beispielsweise gemäß einem Algorithmus, wie er in der Veröffentlichung, Gustafsson, M., "Doubling the lateral resolution of wide-field fluorescence microscopy using structured illumination", in "Three-dimensional and multidimensional microscopy: Image acquisition processing VII", Proceedings of SPIE, Vol. 3919 (2000), p 141-150, beschrieben ist.

In DE10257237A1 sind weitere ROI Bildungen mit einem Linienscanner offenbart ( Änderung effectigve Brennweite, mechanische Blenden)

Figur 3 zeigt eine weitere mögliche Bauweise für ein Laserscanningmikroskop 1, bei dem ein Nipkowscheiben-Ansatz zur Verwirklichung kommt. Das Lichtquellenmodul 2, das in Figur 3 stark vereinfacht dargestellt ist, beleuchtet über ein Minilinsenarray 65 durch den Hauptfarbteiler 17 hindurch eine Nipkow-Scheibe 64, wie sie beispielsweise in US 6.028.306, WO 88 07695 oder DE 2360197 A1 beschrieben ist. Die über das Minilinsenarray 65 beleuchteten Pinholes der Nipkow-Scheibe werden in die im Mikroskopmodul 4 befindliche Probe abgebildet. Um auch hier die probenseitige Bildgröße variieren zu können, ist wiederum die Zoom-Optik 41 vorgesehen.

In Abwandlung zur Bauweise der Figur 1 ist beim Nipkow-Scanner die Beleuchtung im Durchgang durch den Hauptfarbteiler 17 vorgenommen und die zu detektierende Strahlung wird ausgespiegelt. Darüber hinaus ist in Abwandlung zu Figur 2 der Detektor 28 nun ortsauflösend ausgeführt, damit die mit der Nipkow-Scheibe 64 erreichte Multipunktbeleuchtung auch entsprechend parallel abgetastet wird. Ferner ist zwischen der Nipkow-Scheibe 64 und der Zoom-Optik 41 eine geeignete feststehende Optik 63 mit positiver Brechkraft angeordnet, welche die durch die Pinholes der Nipkow-Scheibe 64 divergent austretende Strahlung in geeignete Bündeldurchmesser umwandelt. Der Hauptfarbteiler 17 ist für den Nipkow-Aufbau der Figur 3 ein klassischer dichroitischer Strahlteiler, d. h. nicht der zuvor erwähnte Strahlteiler mit schlitzförmig oder punktförmig reflektierendem Bereich.

Die Zoom-Optik 41 entspricht der zuvor erläuterten Bauweise, wobei natürlich der Scanner 18 durch die Nipkow-Scheibe 64 überflüssig wird. Er kann dennoch vorgesehen werden, wenn man die anhand Figur 2 erläuterte Auswahl eines Bereiches ROI vornehmen möchten. Gleiches gilt für das Abbe-König-Prisma.

Einen alternativen Ansatz mit Multipunktabtastung zeigt in schematischer Darstellung Figur 4, bei der mehrere Lichtquellen schräg in die Scannerpupille einstrahlen. Auch hier läßt sich durch Nutzung der Zoom-Optik 41 zur Abbildung zwischen Hauptfarbteiler 17 und Scanner 18 eine Zoomfunktion wie in Figur 2 dargestellt realisieren. Durch gleichzeitiges Einstrahlen von Lichtbündeln unter verschiedenen Winkeln in einer zur Pupille konjugierten Ebene, werden Lichtpunkte in einer zur Objektebene konjugierten Ebene erzeugt, die vom Scanner 18 gleichzeitig über einen Teilbereich des gesamten Objektfeldes geführt werden. Die Bildinformation entsteht durch Auswertung sämtlicher Teilbilder auf einem ortsauflösenden Matrixdetektor 28.

Als weitere Ausführungsform kommt eine Multipunkt-Abtastung, wie in US 6.028.306 beschrieben, in Frage, deren Offenbarung vollumfänglich diesbezüglich hier einbezogen wird. Auch hier ist ein ortsauflösender Detektor 28 vorzusehen. Die Probe wird dann durch eine Multipunktlichtquelle beleuchtet, die durch einen Strahlexpander mit nachgeordneten Mikrolinsenarray realisiert wird, das eine Multiaperturenplatte so beleuchtet, daß dadurch eine Multipunktlichtquelle realisiert ist.

Die Richtung der Linie in der Probe ist dann normalerweise vorgegeben, kann aber beispielsweise durch Drehung der Probe verändert werden.

Hier steht die Wahl der Neigung der Scanebene frei, sowie eine Wölbung der Scanfläche in einer Richtung.

Online Darstellung der Messdaten auf dem Anzeigegerät (z.B. Bildschirm):

Durch die erfindungsgemäß (insbesondere beim Linesanner) in schneller Folge erzeugbaren z-Stapel wird eine online Darstellung von aus einer zeitlichen Abfolge der z-Stacks errechneten Darstellungsformen ermöglicht.

Beispielsweise kann eine dreidimensionale Darstellung dem Benutzer während seiner Orientierung / Navigation in der Probe, vorteilhaft aus einer bestimmten Blickrichtung, dargeboten werden

Die Probe wird dabei in quasi Echtzeit dargestellt, die Zeit zwischen der Bildaufnahme und der Darstellung liegt in der Größenordnung der Reaktionszeit des Benutzers oder darunter, vorteilhaft mindestens unterhalb einer Sekunde.

der Probe in Quasi- Echtzeit auf dem Bildschirm

z.B. Es kann auch eine räumliche Darstellung des gemessenen Objekts, insbesondere als Schattenprojektion erfolgen. Eds kann mittels unterschiedlicher Farben ( z.B. rot/blau) oder unterschiedlicher Polaristionsrichtung für zwei dargestellte Teilbilder, die der Betrachter mit einer Farb- oder Polarisationsbrille ansieht. Unmittelbar ein synthetisch erzeugtes Stereobild aus zwei Teilbildern dem Benutzer aus densehr4 schnell erstellten räumlichen Bildstapeln dargestellt werden.

z.B. 3D-Darstellung für Rot-Grün-Brille

z.B. 3D-Darstellung mittels 3D-Anzeige-Hilfmitteln (3D-Monitore, z.B. mit Polarisationsbrille)

z.B. 3D-Projektionen

z.B. Oberflächenprofil-Darstellungen, usw.

Der Nutzer kann Abläufe in der Probe (z.B. durch seine Interaktion hervorgerufen) an einem dreidimensionalen Bild der Probe beobachten. Stand der Technik ist die Online-Darstellung eines Schnittes durch die Probe und im Anschluss an die Messung eine Offline Verarbeitung der gemessenen z-Stacks zu 3D-Darstellungen.

Durch Änderung der Funktion des Fokusknopfes am Stativ in eine z-Verschiebung des vom z-Scanners gescannten z-Bereichs kann der Nutzer durch drehen am z-Knopf und durch die übliche Bewegen des Proben Tisches in x und y in alle drei Raumrichtungen durch die Probe navigieren und erhält immer direkt und online einen räumlichen Eindruck vom gemessenen Probenvolumen

Weitere Knöpfe am Stativ (oder zweite Belegung z.B. des Fokusknopfes) könnten zur Einstellung der z-Ausdehnung des vom z-Scanners gescannten z-Bereichs genutzt werden. Damit kann der Kunde den in Z-Richtung sichtbaren Bereich wählen.

Ein weiter Knopf (oder weitere Belegung des Fokusknopfes) kann zur Einstellung der Anzahl der z-Slices bzw. zur Einstellung des Abstandes zwischen den Scanebenen genutzt werden.

Alle drei oben genannten Einstellungen ermöglichen es dem Kunden dann die genannten Parameter unter Online-Beobachtung des Ergebnisses einzustellen.

Weitere applikative Vorteile sind eine mögliche gleiche Zeitauflösung in 3 Achsen, eine ermöglichte Verfolgung/Untersuchung/Dokumentation schneller dynamischer Prozesse in 3D.

Ein schnelles 3D-Tracking ermöglicht das Verfolgen von schnellen Objekten oder Vorgängen in der Probe in allen drei Raumkoordinaten.

Vorteilhaft wird mit der Erfindung ein interaktiver dreidimensionaler " Splinescan " ermöglicht:

Bei der Vorzugsvariante für eine interaktive Definition eines 3D-Spline-Scan wird eine Darstellung von drei orthogonalen Schnittebenen eines bereits aufgenommenen Bildstapels der Probe verwendet. Dabei werden die Bilder einer x-y-Schnittebene, einer x-z-Schnittebene und einer y-z-Schnittebene auf dem Bildschirm dargestellt. Die Position der Schnittebenen werden in der Bildanzeige durch Linien markiert. Der Anwender kann die Position der angezeigten Schnittebenen verändern. Dabei ist für die x-y-Schnittebene die z-Position, für die x-z-Schnittebene die y-Position und für die y-z-Schnittebene die x-Position wählbar. Die Positionsänderung kann über numerische Eingabe, einen Schieberegler oder mit einem Zeigereingabegerät vorgenommen werden.

Die Vorzugsvariante ist eine Veränderung mit einem Zeigereingabegerät. Durch Markieren eines Punkts in einer der drei Bilddarstellungen für die Schnittebenen werden die Positionen für die beiden anderen Schnittebenen festgelegt. Bei Verwendung einer Computermaus kann zusätzlich beim drücken einer Maustaste eine der Markierungslinien ausgewählt werden. Bei Bewegung der Maus bei gedrückter Maustaste wird die Markierungslinie verschoben und damit eine neue Position der Schnitteben festgelegt.

Der Schnittpunkt der drei Schnittebenen wird zur Splinedefinition verwendet. Der Anwender markiert mehrere Punkte auf der gewünschten Splinekurve indem er wiederholt die Schnittebenen verschiebt und jeweils eine Markierungsfunktion über ein Eingabegerät aktiviert.

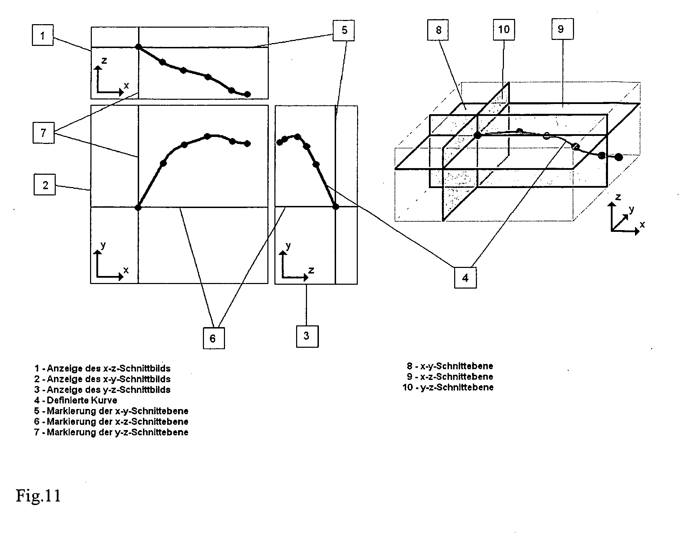

In der Zeichnung Fig.11 zeigen :

A1: Die Anzeige des x-z Schnittbilds
A2: Die Anzeige des x-y Schnittbilds
A3: Die Anzeige des y-z Schnittbilds
A4: Eine definierte Kurve
A5: Die Markierung der x-y Schnittebene
A6: Die Markierung der x-z Schnittebene
A7: Die Markierung der y-z Schnittebene
A8: Die x-y Schnittebene
A9: Die x-z Schnittebene
A10: Die y-z Schnittebene

Eine einfachere Variante für die Splinedefinition ist die Verwendung der Anzeige nur einer Schnittebene, vorzugsweise der x-y-Ebene, und einer Verschiebemöglichkeit in Richtung orthogonal zur Schnittebene. Mit einem Zeigergerät können die Koordinaten in der Schnittebene festgelegt werden. Die dritte Koordinate wird durch die Position des angezeigten Bilds festgelegt. Hier erfolgt die Definition von Punkten auf der Splinekurve ebenfalls durch mehrmaliges Verschieben und Markieren der Punkte.

Bei beiden Varianten besteht die Möglichkeit, die Bilder der Schnittebenen auch als 3D-Projektion auf den Monitor darzustellen. Das Ergebnis einer solchen Projektion kann wie im rechten Teil der Abbildung aussehen. Der Anwender kann zum Verschieben einer Schnittebene, diese mit einer Maus markieren und bei gedrückter Maustaste und Mausbewegung verschieben.

Weiterhin vorteilhaft ist ein Verfahren mit dem eine qualitative bessere Abtastung von beliebig geformten Kurven (Splines) ermöglicht wird. Das Verfahren ist besonders für Fälle geeignet, wo bei einer kurvenförmigen Aufnahmeregion (z.B. Neuronen) eine hohe Abtastrate erforderlich ist.

Bei der Aufnahme von einer kurvenförmigen Aufnahmeregion (Splinescan) werden derzeit die Daten entlang der Abtastpunkte einer vorgegebenen Kurve gewonnen. Diese Kurve wird in der Probe exakt positioniert und mittels des Positionssignales korrigiert. Der Nachteil dieses Verfahrens ist, daß Vorgänge, die in einer geringen Umgebung □ von dieser Kurve stattfinden, nicht wahrgenommen werden. Dies erfordert eine exakte Positionierung der Kurve und statische verwackelungsfreie Aufnahmebedingungen. Bei Zeitserien und kontinuierlicher Datenaufnahme werden dabei einzelne Splines in einer Fluoreszenzprobe gebleicht, währed die benachbarten Regionen nicht gebleicht werden.

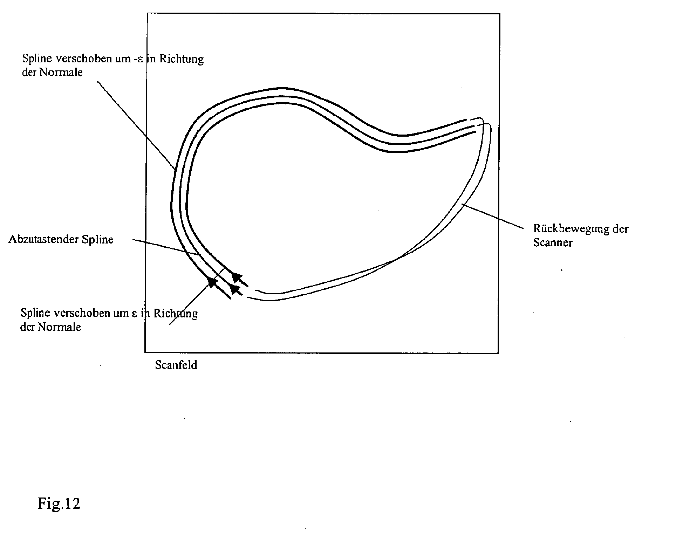

Eine vorteilhafte neue Lösung wird daher beschrieben ( siehe Fig.12) :

Die Daten werden wie zuvor entlang der Abtastpunkte einer vorgegebenen Kurve gewonnen.

Dieser Vorgang wird mehrmals wiederholt. Dabei werden bei jeder Wiederholung die Abtastpunkte um einen kleinen Betrag □in Richtung der Normalen der definierten Kurve verschoben. Die Verschiebung erfolgt in positiver und negativer Richtung, der Betrag der Verschiebung ist variabel. Über die Daten korrespondierender Abtastpunkte der Kurven erfolgt eine Mittelwertbildung. Bei der Mittelwertbildung kann entsprechend der Entfernung des abgetasteten Punktes zur definierten Kurve eine Wichtung erfolgen.

Die Kurven können durch Slinekoordinaten definiert werden, durch die eine Splinekurve gelegt wird (quadratischer, kubischer Spline). Mit den Scannern wird diese Kurve abgetastet.

Dabei wird der AOTF so gesteuert, dass die Probe beleuchtet wird. Ist der Scanner am Ende des Splines angelangt wird er bei unidirektionaler Bildaufnahme zum Anfangspunkt der in der Sequenz folgenden, um □verschobenen Kurve bewegt. Während dieser Rückbewegung wird durch die AOTF Steuerung die Probe nicht beleuchtet. Bei einer bidirektionalen Bildaufnahme werden die Scanner während der Rückbewegung zum Endpunkt der folgenden Splinekurve bewegt. Dies verkürzt die Bildaufnahmezeit.

Eine mögliche Variante bei der Abtastung ist:

- Spline
- Spline verschoben +□ in Richtung der Normale
- Spline verschoben -□ in Richtung der Normale
- Spline verschoben +2□ in Richtung der Normale
- Spline verschoben -2□ in Richtung der Normale

Auf diese Weise werden auch Daten in einer Umgebung der definierten Kurve gewonnen. Durch die wechselseitige Verschiebung der Kurve wird die Belastung der Probe durch Bleichen minimiert.

Die derzeitigen Laser-Scanning-Mikroskope haben einen Scanmode "Fastscan" der zum Auffinden von Objekten und zum Scharfstellen verwendet werden kann. Dieser Scanmode nimmt kontinuierlich so schnell wie möglich Bilder auf und bringt sie zur Anzeige. Die Auflösung wird dazu ggf. verringert und die Scangeschwindigkeit auf Maximum eingestellt. Es ergibt sich damit ein in nahezu fließender Bildeindruck. Der Nachteil ist, das im konfocalen Betrieb nur eine ganz schmale Schicht in Z-Richtung angezeigt wird und dadurch Objekte, die über oder unter dieser Ebene liegen nicht gesehen werden können. Auch im nicht konfocalen Betrieb werden die Ebenen über oder unter der aktuellen Fokusebene nur ganz unscharf abgebildet.

Um dicke Objekte durchgängig scharf darzustellen, gibt es derzeit die Möglichkeit einen Bildstapel aufzunehmen ( dauert mehrere Sekunden ) und diesen offline so zu verrechnen, daß daraus ein Bild mit

erhöhter Tiefenschärfe entsteht. D.h. die einzelnen Bilder des Stapels werden aufeinander projiziert.

Dieses Verfahren ist viel zu langsam, um es online zu verwenden.

Mit Hilfe des in Fig.1-4 beschriebenen schnellen Linienscanners ist es vorteilhaft möglich, bis zu 200 Bilder pro Sekunde aufzunehmen. Damit sind also 5-10 Bildstapel pro Sekunde möglich. Voraussetzung ist, daß der Z-Trieb schnell genug ist, was mit dem Piezoobjektiv gegeben ist. Die Berechnung ist mit den heutigen PCs ebenfalls schnell genug machbar, so daß mindestens 5 Bilder pro Sekunde darstellbar sind. ( nach heutigem Stand der Technik )

Das ist schnell genug um einen fließenden Bildeindruck zu erzeugen, der geeignet ist nach bestimmten Objekten im Präparat zu suchen, indem das Präparat in xy Richtung bewegt wird.

Es erfolgt ein kontinuierlicher scan eines Bildstapels vorzugsweise mit einem schnellen Linienscanner und schnellem Fokustrieb, eine online Berechnung der Projektion und Darstellung des resultierenden Bildes.

Die Geschwindigkeit kann noch dadurch erhöht werden, daß die xy-Bilder in beiden Bewegungsrichtungen des Z-Scanners aufgenommen werden ( bidirektionaler Z-Scan )

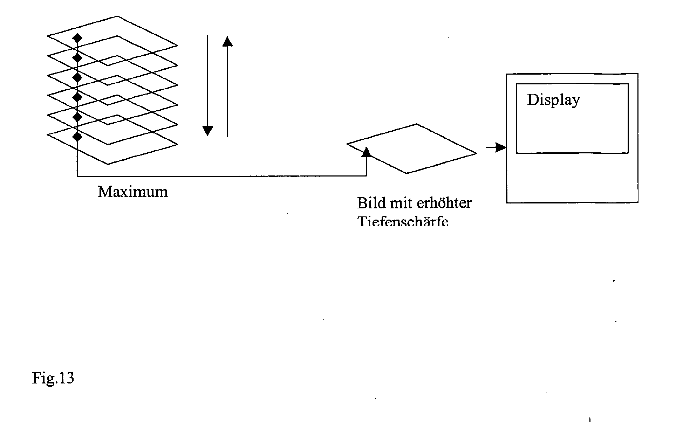

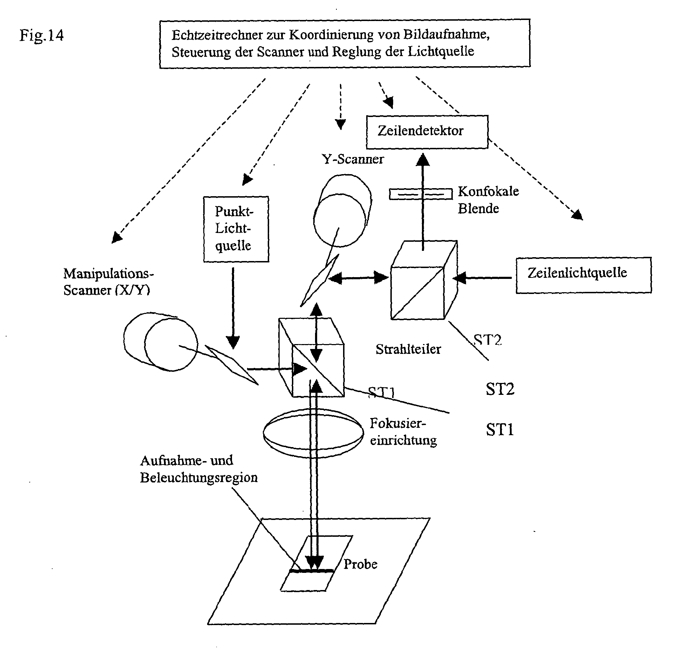

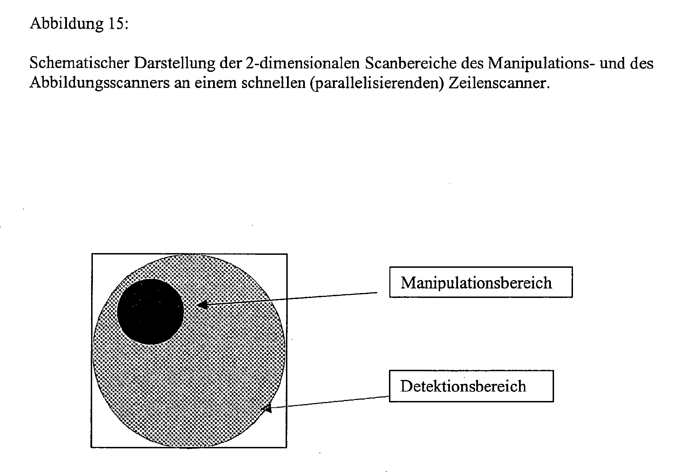

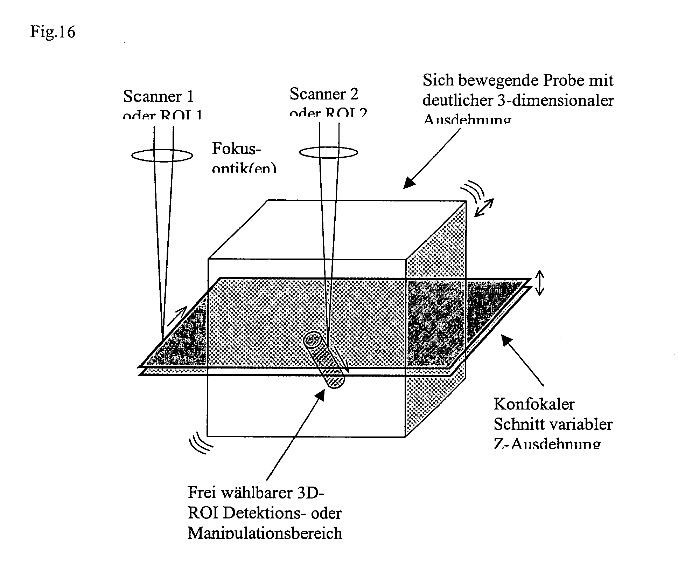

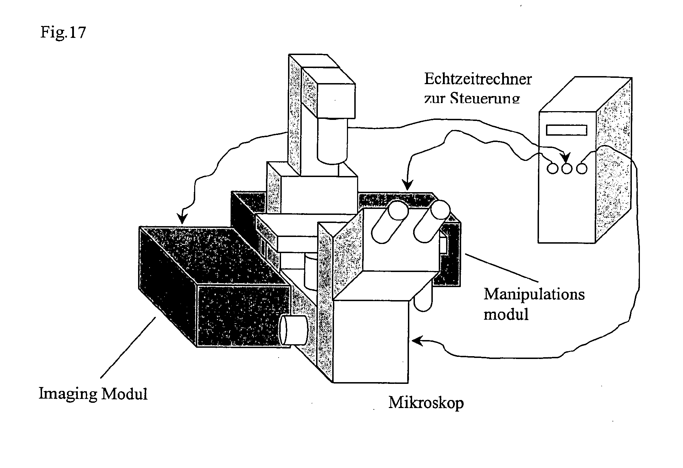

Die Berechnung des resultierenden Bildes wird wie folgt durchgeführt ( Fig13):

In den Einzelbildern des Stapels wird für alle Pixel das Maximum unter den übereinander liegenden Pixel bestimmt und dieses als resultierendes Pixel im Ergebnisbild gespeichert. Pixresult (x,y) = Max(pix(x,y,1), pix(x,y,2), ... ,pix(x,y,z))
Beim Scannen wird die Darstellung der Einzelbilder unterdrückt, und dafür nur das Ergebnisbild angezeigt.

Dieser neue Scanmode kann sowohl zur visuellen Inspektion von dicken Proben, als auch als Input für nachgeschaltete automatische Objekterkennungs-Programme benutzt werden.
Dieser neue Scanmode kann zusätzlich zum bisherigen Fastscan an LSM mit Linienscanner implementiert werden.
Die Festlegung von "regions of interest" wie in DE ...beschrieben ist jetzt vorteilhaft dreidimensional möglich, beispielsweise zum Bleichen von räumlichen Gebieten.
Bei den existierenden konfokal- oder 3D-Mikroskopen sind Regions of Interest (ROIs) 2-dimensionale Bereiche in einer Fokusebene der Probe. Zudem ist die Z-Ausdehnung der Fokusebene bei schnell abtastenden Systemen nicht einstellbar, da üblicherweise feststehende konfokale Blenden auf einer Scheibe benutzt werden. Gegenstand der Erfindung sind Anwendungen an einem schnell abtastenden konfokalen oder 3D-Mikroskop, die eine gleichzeitige (Echtzeit-) Steuerung mehrerer Regions of Interest und konfokaler Schnittebenen in 3D erfordern.
Ein wie beschrieben schnell abtastendes konfokales oder 3D-Mikroskopsystem wird daher vorteilhaft mit mehreren Manipulations- und Abbildungsscannern sowie einstellbarer konfokaler Blende ausgerüstet und von einer Echtzeitelektronik kontrolliert werden, die eine unabhängige schnelle Steuerung der Scanspiegel, Fokusantriebe und konfokaler Blenden erlaubt. Damit sind neue Anwendungen in der Mikroskopie möglich, die bisher vor allem bei der Untersuchung lebender Proben nicht oder nur stark eingeschränkt möglich waren:

1. Analyse lebender Zellen in einer 3D Umgebung, deren Nachbarzellen empfindlich auf Laserbeleuchtung reagieren und die von der Beleuchtung der 3D-ROI geschützt werden müssen;
2. Analyse lebender Zellen in einer 3D Umgebung mit Markierungen, die gezielt durch Laserbeleuchtung in 3D gebleicht werden sollen, z.B. FRET-Experimente;
3. Analyse lebender Zellen in einer 3D Umgebung mit Markierungen, die gezielt durch Laserbeleuchtung gebleicht und gleichzeitig auch ausserhalb der ROI beobachtet werden sollen, z.B. FRAP- und FLIP-Experimente in 3D;
4. Gezielte Analyse lebender Zellen in einer 3D Umgebung mit Markierungen und Pharmaka, die manipulationsbedingte Änderungen durch Laserbeleuchtung aufweisen, z.B. Aktivierung von Transmittern in 3D;
5. Gezielte Analyse lebender Zellen in einer 3D Umgebung mit Markierungen, die manipulationsbedingte Farbänderungen durch Laserbeleuchtung aufweisen, z.B. paGFP, Kaede;
6. Gezielte Analyse lebender Zellen in einer 3D Umgebung mit sehr schwachen Markierungen, die z.B. eine optimale Balance von Konfokalität gegen Detektionsempfindlichkeit erfordern.

Gimpl, G. et al. beschreiben 2002 in Prog. Brain Res., 139:43-55 Experimente mit ROI-Bleichen und Fluoreszenzimaging zur Analyse der Mobilität und Verteilung von GFPmarkierten Oxytocin-Rezeptoren in Fibroblasten. Dabei stellen sich hohe Anforderungen an die räumliche Positionierung und Auflösung sowie die direkte zeitliche Folge von Bleichen und Imaging.
Zhang et al. beschreiben 2001 in Neuron, 31:261-275 live cell Imaging von GFP-transfizierten Nervenzellen, wobei die Bewegung von Granuli durch kombiniertes Bleichen und Fluoreszenzimaging analysiert wurde. Die Dynamik der Nervenzellen stellt dabei hohe Anforderungen an die Geschwindigkeit des Imaging.
Umenishi, F. et al. beschreiben 2000 in Biophys J., 78:1024-1035 eine Analyse der räumlichen Beweglichkeit von Aquaporin in GFP-transfizierten Kulturzellen. Hierzu wurden in den Zellmembranen Punkte gezielt lokal gebleicht und die Diffusion der Fluoreszenz in der Umgebung analysiert.
Eine optische Schnittlegung durch Zellen in beliebigen Kippwinkeln (2D), z.B. zur optimierten Darstellung von verzweigten Nervenzellen kann erfolgen.
Eine orthogonale Schnittlegung bei sehr hohen Bildraten (X/Z oder Y/Z), z.B. zur Untersuchung von Cytoskelettdynamik kann erfolgen.
Eine Untersuchung schneller dynamischer Vorgänge lebender Zellen in 3D, z.B. Ca+-Physiologie, Vesikeltransport wird ermöglicht.
Untersuchung schneller Prozesse an der Kontaktseite von Zellen in Monolayer-Kulturen, wobei der optische Schnitt genau parallel zur Kontaktfläche verläuft, kann erfolgen.
Abbildung 14 zeigt einen schematischen Strahlengang zur Anordnung eines Manipulations- und eines Abbildungsscanners an einem schnellen (parallelisierenden) Zeilenscanner.
Eine Zeilenlichtquelle mit einem y Scanner zur Bewegung der Zeile über die Probe und
eine Punktlichtquelle mit einem x/Y Scanner zur punktweisen rasterförmigen Abtastung der Probe beleuchten über einen Strahlteiler ST1 eine Probe.
Beide Scanner sind wie auch andere Elemente mit einer gemeinsamen Steuereinheit ( Echtzeitrechner ) verbunden, die eine gemeinsame snchronisierte Ansteuerung realisiert. Das trifft auch für eine schnelle periodische z-Verstellung der Fokussiereinrichtung zu, die gemeinsam mit den X,Y Scannern eine schnelle dreidimensionale Bestrahlung ( beispielsweise mit dem Punktscanner ) und Bildaufnahme ( mit dem Zeilenscanner ermöglicht)

Am Strahlteiler ST2 wird das Probenlicht in Richtung eines Zeilen- oder Flächendetektors abgespalten, dem eine ebenfalls bezüglich ihrer Blendenöffnung ansteuerbar einstellbare Schlitzblende vorgeordnet ist, die die z- Ausdehnung eines Probenschnittes variiert..

Abbildung 15 zeigt eine schematischer Darstellung der 2-dimensionalen Scanbereiche des Manipulations- und des Abbildungsscanners an einem schnellen (parallelisierenden) Zeilenscanner.

Abbildung 16 zeigt in schematischer Darstellung die 3-dimensionalen Scanbereiche des Manipulations- und des Abbildungsscanners an einem schnellen (parallelisierenden) Zeilenscanner.

Durch die in Fig.16 schematisch dargestellte Ansteuerung des Zeilenscanners , hier als Scanner 1 bezeichnet , wird in Abhängigkeit von der gewählten Schlitzblendenöffnung, die die Schärfentiefe Z definiert, eine schnelle Bildaufnahme in einem Schnitt S durchgeführt und gleichzeitig über eine zweites Scanmodul ( Scanner 2) ein dreidimensionaler Bereich ROI 2 zur Bildaufnahme abgetastet oder gezielt manipuliert durch geeignete Manipulationswellenlängen. Abbildung und Manipulation kann dabei auch in unterschiedlichen Z-Ebenen der Probe stattfinden, indem eine oder mehrere Fokusoptiken entsprechend eingestellt werden. Eine ROI kann beweglich sein und zur Aufnahme und/oder Manipulation beweglicher Proben den Proben nachführbar sein, wobei die Probenbewegung dreidimensional mittels Bildverarbeitung erfaßt und entsprechende Korrektursignale zur Scannernachführung eingestellt werden.

Abbildung 17 zeigt die Darstellung einer möglichen Ausführungsform zur Anpassung zweier Scanmodule (Manipulations- und des Abbildungsscanner) an einem Mikroskop unter Verwendung eines Seiten- und eines Rückports zur optischen Einkopplung. Schematisch ist eine zentrale Rechner/ und Ansteuereinheit dargestellt, die über Signalleitungen zur Ansteuerung und Datenauswertung mit an ein Mikroskopstativ angekoppelten Modulen zur Bildaufnahme (vorzugsweise Zeilenscanner ) und zur gezielten Manipulation ( gescannter Manipulationsstrahl) verbunden ist

Die beschriebene Erfindung stellt eine bedeutende Ausweitung der Anwendungsmöglichkeiten von schnellen konfokalen Laserscanmikroskopen dar. Die Notwendigkeit einer solchen Weiterentwicklung lässt sich leicht anhand der zellbiologischen Standardliteratur und den dort beschriebenen schnellen zellulären und subzellulären Vorgängen[1] und den eingesetzten Untersuchungsmethoden mit einer Vielzahl von Farbstoffen[2] ablesen. Siehe z.B.:

[1]B. Alberts et al. (2002): Molecular Biology of the Cell; Garland Science.

[1,2]G. Karp (2002): Cell and Molecular Biology: Concepts and Experiments; Wiley Text Books.

[1,2]R. Yuste et al. (2000): Imaging neurons - a laboratory Manual; Cold Spring Harbor Laboratory Press, New York.

[2]R.P. Haugland (2003): Handbook of fluorescent Probes and research Products, 10th Edition; Molecular Probes Inc. and Molecular Probes Europe BV.

Die beschriebene Erfindung ist u.a. für die Untersuchung von Entwicklungsprozessen geeignet, die sich vor allem durch dynamische Prozesse im Zehntelsekunden bis hin zum Stundenbereich auszeichnen. Beispielanwendungen auf der Ebene von Zellverbänden und ganzen Organismen sind z.B. hier beschrieben:

■ Abdul-Karim, M.A. et al. beschreiben 2003 in Microvasc. Res., 66:113-125 eine Langzeitanalyse von Blutgefässveränderungen im lebenden Tier, wobei Fluoreszenzbilder in Intervallen über mehrere Tage aufgenommen wurde. Die 3D-Datensätze wurden mit adaptiven Algorithmen ausgewertet, um die Bewegungstrajektorien schematisch darzustellen.

■ Soll, D.R. et al. beschreiben 2003 in Scientific World Journ. 3:827-841 eine softwarebasierte Bewegungsanalyse von mikroskopischen Daten von Kernen und Pseudopodien lebender Zellen in allen 3 Raumdimensionen.

■ Grossmann, R. et al. beschreiben 2002 in Glia, 37:229-240 eine 3D-Analyse der Bewegungen von Mikrogliazellen der Ratte, wobei die Daten über bis zu 10 Stunden aufgenommen wurden. Gleichzeitig kommen nach traumatischer Schädigung auch schnelle Reaktionen der Glia vor, so dass eine hohe Datenrate und entsprechendes Datenvolumen entsteht.

Die beschriebene Erfindung ist für die Untersuchung von innerzellulären Transportvorgängen exzellent geeignet, da hierbei recht kleine motile Strukturen, z.B. Proteine, mit hoher Geschwindigkeit (meist im Bereich von Hundertstelsekunden) dargestellt werden müssen. Um die Dynamik von komplexen Transportvorgängen zu erfassen, kommen oft auch Anwendungen wie FRAP mit ROI-Bleichen zum Einsatz. Beispiele für solche Studien sind z.B. hier beschrieben:

■ Umenishi, F. et al. beschreiben 2000 in Biophys J., 78:1024-1035 eine Analyse der räumlichen Beweglichkeit von Aquaporin in GFP-transfizierten Kulturzellen. Hierzu wurden in den Zellmembranen Punkte gezielt lokal gebleicht und die Diffusion der Fluoreszenz in der Umgebung analysiert.

■ Gimpl, G. et al. beschreiben 2002 in Prog. Brain Res., 139:43-55 Experimente mit ROI-Bleichen und Fluoreszenzimaging zur Analyse der Mobilität und Verteilung von GFPmarkierten Oxytocin-Rezeptoren in Fibroblasten. Dabei stellen sich hohe Anforderungen an die räumliche Positionierung und Auflösung sowie die direkte zeitliche Folge von Bleichen und Imaging.

■ Zhang et al. beschreiben 2001 in Neuron, 31:261-275 live cell Imaging von GFP-transfizierten Nervenzellen, wobei die Bewegung von Granuli durch kombiniertes Bleichen und Fluoreszenzimaging analysiert wurde. Die Dynamik der Nervenzellen stellt dabei hohe Anforderungen an die Geschwindigkeit des Imaging.

Die beschriebene Erfindung ist insbesondere für die Darstellung molekularer und anderer subzellulärer Wechselwirkungen geeignet. Hierbei müssen sehr kleine Strukturen mit hoher Geschwindigkeit (im Bereich um die Hundertstelsekunde) dargestellt werden. Um die für die Wechselwirkung notwendige räumliche Position der Moleküle aufzulösen, sind auch indirekte Techniken wie z.B. FRET mit ROI-Bleichen einzusetzen. Beispielanwendungen sind z.B. hier beschrieben:

■ Petersen, M.A. und Dailey, M.E. beschreiben 2004 in Glia, 46:195-206 eine Zweikanalaufnahme lebender Hippokampuskulturen der Ratte, wobei die zwei Kanäle für die Marker Lectin und Sytox räumlich in 3D und über einen längeren Zeitraum aufgezeichnet werden.

■ Yamamoto, N. et al. beschreiben 2003 in Clin. Exp. Metastasis, 20:633-638 ein Zweifarbimaging von humanen fibrosarcoma Zellen, wobei grünes und rotes fluoreszentes Protein (GFP und RFP) simultan in Echtzeit beobachtet wurde.

■ Bertera, S. et al. beschreiben 2003 in Biotechniques, 35:718-722 ein Multicolorimaging von transgenen Mäusen markiert mit Timer reporter Protein, welches seine Farbe nach Synthese von grün in rot ändert. Die Bildaufnahme erfolgt als schnelle Serie 3-dimensional im Gewebe am lebenden Tier.

Die beschriebene Erfindung ist für die Untersuchung von meist extrem schnellen Signalübertragungsvorgängen hervorragend sehr gut geeignet. Diese meist neurophysiologischen Vorgänge stellen höchste Anforderungen an die zeitliche Auflösung, da die durch Ionen vermittelten Aktivitäten sich im Bereich von Hundertstel- bis kleiner als Tausendstelsekunden abspielen. Beispielanwendungen von Untersuchungen im Muskel- oder Nervensystem sind z.B. hier beschrieben:

■ Brum G et al. beschreiben 2000 in J Physiol. 528: 419-433 die Lokalisation von schnellen Ca+ Aktivitäten in Muskelzellen des Frosches nach Reizung mit Caffeine als Transmitter. Die Lokalisation und Mikrometer-genaue Auflösung gelang nur durch Einsatz eines schnellen, konfokalen Mikroskopes.

■ Schmidt H et al. beschreiben 2003 in J Physiol. 551:13-32 eine Analyse von Ca+ Ionen in Nervenzellfortsätzen von transgenen Mäusen. Die Untersuchung von schnellen Ca+-Transienten in Mäusen mit veränderten Ca+ bindenden Proteinen konnte nur mit hochauflösender konfokaler Mikroskopie durchgeführt werden, da auch die Lokalisation der Ca+ Aktivität innerhalb der Nervenzelle und deren genaue zeitliche Kinetik eine wichtige Rolle spielt.

## Patentansprüche

1.  Verfahren zur Erfassung mindestens eines Probenbereiches mit einem Lichtrastermikroskop durch eine Relativbewegung zwischen Beleuchtungslicht und Probe über erste Scanmittel entlang mindestens einer Scanachse im wesentlichen senkrecht zur Beleuchtungsachse,
    wobei in einem Winkel zur Ebene der Relativbewegung, vorzugsweise senkrecht dazu , zweite Scanmittel , bewegt werden und eine Bildaufnahme erfolgt, indem die Bewegung der ersten und zweiten Scanmittel gekoppelt wird und eine dreidimensionale Abtastbewegung durch die Beleuchtung in der Probe erfolgt.

2.  Verfahren nach einem der vorangehenden Ansprüche,
    wobei die zweiten Scanmittel gekoppelt mit der Bewegung der ersten Scanmittel derart bewegt werden, dass gerade und / oder gekrümmte Linien und/ oder ebene und / oder gekrümmte Flächen gescannt werden , welche entlang mindestens einer Scanrichtungen der ersten Scanmittel als auch entlang der Scanrichtung der zweiten Scanmittel ausgedehnt sind.

3. Verfahren nach einem der vorangehenden Ansprüche,
wobei mindestens die zweiten Scanmittel anhand einer Vorkalibrierung auf die Masse der verwendeten Probe und / oder die Masse des verwendeten Objektives und/ oder die Masse des verwendeten Probentisches zur Erzeugung einer Ansteuerkurve kalibriert wurden, und die Bewegung der Scanmittel anhand der aufgenommenen Kalibrierkurve erfolgt

4. Verfahren nach einem der vorangehenden Ansprüche,
wobei eine Übertragungsfunktion und/ oder look up table der Bewegung der zweiten Scanmittel ermittel wird

5. Verfahren nach einem der vorangehenden Ansprüche,
wobei eine Ansteuerung der ersten und/ oder zweiten Scanmittel zeitlich periodisch erfolgt

6. Verfahren nach einem der vorangehenden Ansprüche,
wobei eine Grundfrequenz der Ansteuerkurven der ersten und zweiten Scanmittel gleich ist

7. Verfahren nach einem der vorangehenden Ansprüche,
wobei die Beleuchtung der Probe punktförmig erfolgt

8. Verfahren nach einem der vorangehenden Ansprüche,
wobei eine Beleuchtung mehrerer Probenpunkte gleichzeitig erfolgt

9. Verfahren nach einem der vorangehenden Ansprüche,
wobei eine Beleuchtung der Probe mit linienförmiger Lichtverteilung erfolgt

10. Verfahren nach einem der vorangehenden Ansprüche,
wobei die Linie aus mehreren nebeneinander liegenden Punkten gebildet wird.

11. Verfahren nach einem der vorangehenden Ansprüche,
wobei die zweiten Scanmittel durch ein Objektiv mit Piezoantrieb oder einen schnbell verstellbaren Tisch oder einen adaptiven Spiegel gebildet sind

12. Verfahren nach einem der vorangehenden Ansprüche,
wobei eine Erzeugung einer zweiten Rasterbewegung anhand des Frequenzganges der Ansteuersignale und/ oder anhand Vorgaben aus einer look up Tabelle erfolgt.

13. Verfahren nach einem der vorangehenden Ansprüche,
wobei eine zweite periodische Rasterbewegung kurvenförmig, vorzugsweise sinusförmig und/ oder linear ansteigend und/ oder abnehmend ist.

14. Verfahren nach einem der vorangehenden Ansprüche,
wobei eine gemeinsame synchroniserte Ansteuerung der rasternden Bilderfassung der ersten und zweiten Mittel zur Erzeugung räumlich variabler Beleuchtungsgebiete erfolgt.

15. Verfahren nach einem der vorangehenden Ansprüche, wobei eine Beeinflussung von Lage und/ oder Form und/ oder zeitlicher Veränderung des Beleuchtungsgebiets und / oder der Beleuchtungsbedingungen und/ oder der Bildaufnahmebedingungen durch eine Detektionseinheitüber eine Steuereinheiterfolgt

16. Verfahren nach einem der vorangehenden Ansprüche, wobei
das Beleuchtungsgebiet eine beliebig geformte und/ oder orientierte Linie oder Fläche oder ein beliebig geformtes und/ oder orientiertes Volumenelement ist

17. Verfahren zur Erfassung mindestens eines Probenbereiches mit einem Lichtrastermikroskop , insbesondere nach einem der vorangehenden Ansprüche ,
wobei dem Nutzer während der Einstellung der Schnittdicke des betrachteten Bildschnittes oder eines Probeneingriffs und/ oder einer Einstellung den Beleuchtungs-/und/ oder Bildaufnahmebedingungen und / oder seiner Orien-

EP 1 617 267 A2

tierung oder Navigation in der Probe mehrfach ein dreidimensionales Bild mit einer Bildentstehungszeit /Verzögerungszeit unterhalb einer Sekunde ( unterhalb / IN DER Größenordnung seiner Reaktionszeit) erzeugt und dargestellt wird.

18. Verfahren nach einem der vorangehenden Ansprüche,
wobei das Bild entsprechend einer vorgewählten Blickrichtung erzeugt und dargestellt wird

19. Verfahren nach einem der vorangehenden Ansprüche,
wobei die Blickrichtung variiert wird

20. Verfahren zur Erfassung mindestens eines Probenbereiches mit einem Lichtrastermikroskop , insbesondere nach einem der vorangehenden Ansprüche ,
wobei das dargestellte Bild aus mehreren Bildstapeln erzeugt wird, wobei durch Intensitätsvergleich jeweils aus in Blickrichtung übereinanderliegenden Probenorten der mit der höchsten Intensität abgespeichert und dargestellt wird.

21. Verfahren zur Erfassung mindestens eines Probenbereiches mit einem Lichtrastermikroskop , insbesondere nach einem der vorangehenden Ansprüche ,
wobei über Eingabemittel räumlich variable Beleuchtungsgebiete ( ROI) einstellbar sind

22. Verfahren nach einem der vorangehenden Ansprüche,
wobei ein durch die Eingabemittel vorgegebenes Abtastgebiet einer zu erfassenden Struktur bei Ortsänderung folgt

23. Verfahren nach einem der vorangehenden Ansprüche,
wobei eine Probenmanipulation in einem eingestellten Beleuchtungsgebiet erfolgt

24. Verfahren nach einem der vorangehenden Ansprüche, mit mehreren Scannern zur räumlich unabhängigen (ROI-) Manipulation und/ oder Abbildung

25. Verfahren nach einem der vorangehenden Ansprüche, mit mindestens einer einstellbaren konfokalen Blende zur optischen 3D-Schnittlegung

26. Verfahren nach einem der vorangehenden Ansprüche, mit einer Mehrfach-Linienbeleuchtung und mehreren Zeilendetektoren.

27. Verfahren oder Anordnung zur Erfassung mindestens eines Probenbereiches mit einem Lichtrastermikroskop , insbesondere nach einem der vorangehenden Ansprüche ,
wobei die Probe über voneinander unabhängige Scanmittel mehrfach beleuchtet wird,
wobei die unterschiedlichen Scanmittel gleiche und/ oder unterschiedliche Probenbereiche beleuchten und eine unabhängige und/ oder gemeinsame Detektion des Probenlichtes erfolgt

28. Verfahren oder Anordnung nach einem der vorangehenden Ansprüche,
wobei die ersten und / oder zweiten Mittel zumindest teilweise doppelt in einem ersten und zweiten System vorgesehen sind die gleichzeitig und/ oder sequentiell auf gleiche Proben gerichtet sind

29. Verfahren nach einem der vorangehenden Ansprüche,
wobei eine erste Beleuchtung der Bilderfassung und eine zweite Beleuchtung der Probenbeeinflussung dient

30. Verfahren nach einem der vorangehenden Ansprüche,
wobei bei einer Veränderung des Beleuchtungsbereiches durch die erste oder zweite Beleuchtung der Beleuchtungsbereich der jeweils anderen Beleuchtung durch eine gemeinsame Ansteuereinheit nachgeführt wird.

31. Verfahren nach einem der vorangehenden Ansprüche,
wobei bei einer detektierten Veränderung innerhalb des erfaßten Beleuchtungsbereiches durch das erste oder zweite System der erfaßte Beleuchtungsbereich des jeweils anderen System durch eine beiden Systemen gemeinsame Ansteuereinheit verändert wird.

32. Verfahren nach einem der vorangehenden Ansprüche,
wobei anhand eines Übersichtsbildes ein Beleuchtungsbereich ausgewählt wird.]

16

**33.** Verfahren nach einem der vorangehenden Ansprüche,
wobei der zur Bilderfassung beleuchtete Bereich größer als der zur Probenbeeinflussung beleuchtete Bereich ist.

**34.** Verfahren nach einem der vorangehenden Ansprüche,
wobei mehrere Probenbereiche simultan und/ oder sequentiell durch eine Beleuchtung beeinflußt werden und diese Probenbereiche durch die andere Beleuchtung simultan und/ oder sequentiell beleuchtet und bildlich dertektiert werden.

**35.** Verfahren nach einem der vorangehenden Ansprüche,
wobei durch Eingabemittel ein variabler räumlicher Probenbereich zur Beeinflussung und/oder Probenerfassung vorgegeben wird.

**36.** Verfahren zur Erfassung mindestens eines Probenbereiches mit einem Lichtrastermikroskop , insbesondere nach einem der vorangehenden Ansprüche ,
wobei dreidimensionale Schnittebenen durch die Probe dargestellt werden

**37.** Verfahren nach einem der vorangehenden Ansprüche,
wobei eine Vorgabe der Schnittebenen durch den Nutzer erfolgt

**38.** Verfahren nach einem der vorangehenden Ansprüche,
wobei dreidimensional mehrere Punkte zur Definition einer dreidimensionalen Kurve markiert werden

**39.** Verfahren nach einem der vorangehenden Ansprüche,
wobei eine Beleuchtung einer Aufnahmeregion mehrfach erfolgt, wobei eine Verschiebung der Aufnahmekoordinaten mindestens einmal in entgegengesetzte Richtungen erfolgt

**40.** Verfahren nach einem der vorangehenden Ansprüche,
wobei eine Erfassung einer Probe mit einer Nipkowanordnung, einer Multipunktbeleuchtungsanordnung oder einem Resonanzscanner erfolgt.

**41.** Verwendung von Verfahren nach mindestens einem der vorangehenden Ansprüche zur Untersuchung von Entwicklungsprozessen insbesondere dynamischer Prozesse im Zehntelsekunden bis hin zum Stundenbereich insbesondere auf der Ebene von Zellverbänden und ganzen Organismen, insbesondere einer der folgenden Alternativen:

  • Analyse lebender Zellen in einer 3D Umgebung, deren Nachbarzellen empfindlich auf Laserbeleuchtung reagieren und die von der Beleuchtung der 3D-ROI geschützt werden müssen;
  • Analyse lebender Zellen in einer 3D Umgebung mit Markierungen, die gezielt durch Laserbeleuchtung in 3D gebleicht werden sollen, z.B. FRET-Experimente;
  • Analyse lebender Zellen in einer 3D Umgebung mit Markierungen, die gezielt durch Laserbeleuchtung gebleicht und gleichzeitig auch ausserhalb der ROI beobachtet werden sollen, z.B. FRAP- und FLIP-Experimente in 3D;
  • Gezielte Analyse lebender Zellen in einer 3D Umgebung mit Markierungen und Pharmaka, die manipulationsbedingte Änderungen durch Laserbeleuchtung aufweisen, z.B. Aktivierung von Transmittern in 3D;
  • Gezielte Analyse lebender Zellen in einer 3D Umgebung mit Markierungen, die manipulationsbedingte Farbänderungen durch Laserbeleuchtung aufweisen, z.B. paGFP, Kaede;
  • Gezielte Analyse lebender Zellen in einer 3D Umgebung mit sehr schwachen Markierungen, die z.B. eine optimale Balance von Konfokalität gegen Detektionsempfindlichkeit erfordern.
  • Lebende Zellen in einem 3D-Gewebeverband mit variierenden Mehrfachmarkierungen, z.B. CFP, GFP, YFP, DsRed, HcRed u.ä.
  • Lebende Zellen in einem 3D-Gewebeverband mit Markierungen, die funktionsabhängige Farbänderungen aufweisen, z.B. Ca+-Marker
  • Lebende Zellen in einem 3D-Gewebeverband mit Markierungen, die entwicklungsbedingte Farbänderungen aufweisen, z.B. transgene Tiere mit GFP
  • Lebende Zellen in einem 3D-Gewebeverband mit Markierungen, die manipulationsbedingte Farbänderungen durch Laserbeleuchtung aufweisen, z.B. paGFP, Kaede
  • Lebende Zellen in einem 3D-Gewebeverband mit sehr schwachen Markierungen, die eine Einschränkung der Konfokalität zugunsten der Detektionsempfindlichkeit erfordern.
  • Letztgenannter Punkt in Kombination mit der Vorangehenden

**42.** Verwendung von Verfahren nach mindestens einem der vorangehenden Ansprüche für die Untersuchung von innerzellulären Transportvorgängen , insbesondere zur Darstellung kleine motile Strukturen, z.B. Proteine, mit hoher Geschwindigkeit (meist im Bereich von Hundertstelsekunden) insbesondere für Anwendungen wie FRAP mit ROI-Bleichen

**43.** Verwendung von Verfahren nach mindestens einem der vorangehenden Ansprüche für die Darstellung molekularer und anderer subzellulärer Wechselwirkungen geeignet. Insbesondere der Darstellung sehr kleine Strukturen mit hoher Geschwindigkeit vorzugsweise unter Verwendung indirekter Techniken wie z.B. FRET mit ROI-Bleichen zur Auflösung submolekularar Strukruren

**44.** Verwendung von Verfahren nach mindestens einem der vorangehenden Ansprüche schnellen Signalübertragungsvorgängen , insbesondere neurophysiologischen Vorgängen mit hoher zeitlicher Auflösung, da die durch Ionen vermittelten Aktivitäten sich im Bereich von Hundertstel- bis kleiner als Tausendstelsekunden abspielen, insbesondere bei Untersuchungen im Muskel- oder Nervensystem

Fig.1

Fig.2

Fig.4

Fig.3

Bild 5:

Signal,
Ort

A

P

Zeit

Bild 6:

Signal,
Ort

A

P

Zeit

Signal,
Ort

Ansteuersignal

Probenbewegung

Zeit

Bild 7: Sinusförmige Ansteuerung

EP 1 617 267 A2

Bild 8:

X - Positionierrichtung vom X-Scanner
Y - Positionierrichtung vom Y-Scanner
$X_{Ziel}$ - Projektion des Zielpunktes auf die Positionierrichtung des X-Scanners
$Y_{Ziel}$ - Projektion des Zielpunktes auf die Positionierrichtung des Y-Scanners

22

Bild 9:

Bewegung des Y-Scanners

$Y_{max, Bild}$

$Y_{max, Line}$

SC

Bewegung des Spots in der Probe

$Y_{min, Line}$

$Y_{min, Bild}$

Bewegung des X-Scanners

X

$X_{min, Line}$          $X_{max, Line}$

23

Fig. 10 zeigt schematisch die Lage eines Lichtspots im X/Y/Z Raum

1 - Anzeige des x-z-Schnittbilds
2 - Anzeige des x-y-Schnittbilds
3 - Anzeige des y-z-Schnittbilds
4 - Definierte Kurve
5 - Markierung der x-y-Schnittebene
6 - Markierung der x-z-Schnittebene
7 - Markierung der y-z-Schnittebene

8 - x-y-Schnittebene
9 - x-z-Schnittebene
10 - y-z-Schnittebene

Fig.11

Spline verschoben um -ε in Richtung
der Normale

Abzutastender Spline

Spline verschoben um ε in Richtung
der Normale

Scanfeld

Rückbewegung der
Scanner

Fig.12

Maximum

Bild mit erhöhter
Tiefenschärfe

Display

Fig.13

Fig.14

Echtzeitrechner zur Koordinierung von Bildaufnahme,
Steuerung der Scanner und Reglung der Lichtquelle

Zeilendetektor

Y-Scanner

Punkt-
Lichtquelle

Konfokale
Blende

Zeilenlichtquelle

Manipulations-
Scanner (X/Y)

Strahlteiler

ST2

ST2

ST1

ST1

Fokusiereinrichtung

Aufnahme- und
Beleuchtungsregion

Probe

Abbildung 15:

Schematischer Darstellung der 2-dimensionalen Scanbereiche des Manipulations- und des Abbildungsscanners an einem schnellen (parallelisierenden) Zeilenscanner.

Manipulationsbereich

Detektionsbereich

Fig.16

Scanner 1
oder ROI 1

Scanner 2
oder ROI 2

Fokus-
optik(en)

Sich bewegende Probe mit
deutlicher 3-dimensionaler
Ausdehnung

Konfokaler
Schnitt variabler
Z.-Ausdehnung

Frei wählbarer 3D-
ROI Detektions- oder
Manipulationsbereich

Fig.17

Echtzeitrechner
zur Steuerung

Manipulations
modul

Imaging Modul

Mikroskop